# EUROPEAN PATENT SPECIFICATION

(11) **EP 1 109 121 B1**
(45) Date of publication and mention of the grant of the patent: **27.03.2013**
(21) Application number: 00126736.8
(22) Date of filing: 06.12.2000
(51) Int. Cl.: G06Q 10/00

(54) **System and method of electronic mail-based event scheduling**
System und Verfahren zum auf elektronischen Nachrichten basiertes Terminplanen
Système et méthode de planification d'evenements à partir de courriers électronique

(30) Priority: 17.12.1999 US 466423
(43) Date of publication of application: 20.06.2001
(73) Proprietor: Alcatel Lucent, 75007 Paris (FR)
(72) Inventor: Bobo, Richard M. jr., Plano, Texas 75025 (US)
(74) Representative: Wetzel, Emmanuelle

(56) References cited:
- EP-A- 0 851 372
- WO-A-99/26174
- US-A- 5 898 873

## Description

### TECHNICAL FIELD OF THE INVENTION

This invention is related in general to the field of computer software. More particularly, the invention is related to a system and method of electronic mail-based event scheduling.

### BACKGROUND OF THE INVENTION

As we enter the new millennium, we are forced to process increasing amounts of information. Information come at us in printed form, audio form and electronic form from a variety of sources. We not only get information from traditional sources like newspapers, magazines, journals, books, radio and television, but also from electronic sources like the Internet and the World Wide Web. To keep up, we quicken our pace at work and at home, and we try to be efficient with our time and our schedules. However, one thing continues to confound us. That is, the scheduling of meetings at work in an efficient manner.

Traditionally, a meeting planner would check every attendee's schedule to arrive at a date and time slot that suits everyone. With the prevalent use of electronic mail or e-mail, the meeting planner may prefer to send out an e-mail message to all attendees to announce the tentative meeting date and time. The attendees are requested to check their respective schedules and respond with either a "I can attend" or a "I cannot make it" and an alternate date and time. The meeting planner may go ahead with the original date and time if everyone can attend or if the goal of the meeting can still be achieved with a small percentage of absenteeism. Alternatively, the meeting planner may be forced to change the date and time to accommodate one or more important attendees who cannot attend at the original date and time. This scenario may be repeated until a satisfactory date and time can be set. However, the above illustrates an ideal situation where every attendee is prompt about responding to the e-mail or actually does respond to the e-mail. Typically, scheduling a meeting in a business enterprise that involves more than three people is a time consuming and laborious task. Often meeting dates are postponed repeatedly because no consensus can be reached.

Existing meeting scheduling software such as The meeting planner in MICROSOFT OUTLOOK^{™} improves the meeting planning process, but it is still less than ideal. To schedule a meeting or enter an event on a calendar using conventional scheduling applications, one must have access to the scheduling application via a terminal session and enter the schedule information via the dedicated user interface of the scheduling application. This may be easily done on company premises, but is often tricky for remote access. To establish a terminal session with a scheduling tool such as MS OUTLOOK^{™} that is hosted on a company machine, a connection must be made. For dial-up access, equipment (modems and phone line) must be available for each dial-up interface. For a large company, several such dial-up equipment is needed. Each user has to connect to these modems regardless of their location which could be costly if long distance calling charges apply. Also, special usage accounts and/or equipment for these connections are often required to comply with the security requirements of an institution. For telnet access (another method of establishing a terminal session), the user must have access to a telnet client, know the machine name or IP address which hosts the MS OUTLOOK application, and have a user account that allows telnet access. The host machine must also have a telnet server which is unpopular for non-technical businesses.

Therefore, conventional event scheduling applications do not allow easy access from remote locations.

European patent application EP 0851372 A2 relates to an information processing apparatus for managing schedule data and a method therefor. When electronic mail is received, the contents of the electronic mail is analyzed, and an item concerning a schedule is extracted from the analysis results. When the date associated with the extracted item is advanced to the present time, the item is stored as a user's schedule in a database employed for the storage of schedule data. Schedule data that conflict with the item are searched for in the database. To rearrange conflicting schedules, a change in a schedule is requested to the transmission source, or the priorities of the conflicting schedules are compared, and the cancellation of a schedule having a low priority is proposed to a user.

### SUMMARY OF THE INVENTION

Therefore, there is a need for an event scheduler that allows the users to easily schedule events, check his or her own schedule, check the availability of event participants, and check the availability of resources remotely without having to establish burdensome and slow dial-up or telnet connections.

In one aspect of the invention, an electronic mailbased event scheduling system of the present invention includes a message parser accessing an electronic mail message received from a sender, extracting scheduling information therefrom, and storing the extracted scheduling information in a predetermined format in a globally accessible record. The globally accessible record stores extracted scheduling information including event scheduler data, event data, resource data, and participant data. The system also includes a schedule information database and an event processing function accessing the globally accessible record and the schedule information database, performing a function according to the data therein, and preparing and sending an outgoing electronic mail message to the sender and any affected event participant to acknowledge and report on the performed function.

In another aspect of the invention, a method of electronic mail-based event scheduling includes the steps of receiving an electronic mail message sent by a sender to a predetermined event scheduling system address, parsing the electronic mail message to extract scheduling information therefrom, including event scheduler data, event data, resource data, and participant data. The extracted scheduling information is stored in a predetermined format in a globally accessible record. The method then processes the scheduling information in the globally accessible record and access schedule information stored in a schedule information database, perform a function according to the data therein, and prepare and send an outgoing electronic mail message to the sender and any affected event participant to acknowledge and report on the performed function.

In yet another aspect of the invention, a method of scheduling events using electronic mail includes the steps of preparing an electronic mail message containing scheduling information and sending it to a predetermined event scheduling system address, receiving the electronic mail message and storing the electronic mail message in a message database, accessing the message database and parsing the received electronic mail message to extract scheduling information therefrom. The scheduling information includes event scheduler data, event data, resource data, and participant data. The method then includes the steps of storing the extracted scheduling information in a predetermined format in a globally accessible record, and processing the scheduling information in the globally accessible record and accessing schedule information stored in a schedule information database, performing a function according to the data therein, and preparing and sending an outgoing electronic mail message to the sender and any affected event participant to acknowledge and report on the performed function.

A technical advantage of the present invention is that the e-mail-based event scheduling system and method would optimally offer many of the features and components that are common to other computer based scheduling tools such as event reminder notification, a dedicated (non-email) graphical user interface and schedule presentation, security features, repetition and duration features (to handle a weekly meeting for a six month period for example), and many more. In addition to these capabilities, the system of the present invention offers the advantages and feature options that are a direct result of the e-mail based user interface. These advantages include extending the reach of event scheduling beyond common system barriers that typically prevent or discourage remote tool usage without the need of special connection arrangements. Another advantage is that the inputting of scheduling data is not a separate process since data is extracted from an e-mail event announcement message that would have been sent anyway. Furthermore, easy schedule validation/coordination capabilities avoids the tedious task of polling invitees for scheduling input, manually comparing schedules, or maintaining and using overlays that come with many scheduling tools. A further advantage is that the user can enjoy the flexibility of using any of the many available e-mail clients to access the system of the present invention rather than being limited to one dedicated user interface and event scheduling application program. However, a dedicated user interface for the system of the present invention could still be provided to facilitate e-mail message composition. For example, a commonly available web browser-based graphical user interface may be used to allow the user to enter schedule information.

### BRIEF DESCRIPTION OF THE DRAWINGS

For a better understanding of the present invention, reference may be made to the accompanying drawings, in which:
FIGURES 1A through 1C are simplified block diagrams of exemplary system configurations of the system and method of email-based event scheduling according to the teachings of the present invention;
FIGURE 2 is a block diagram of an embodiment of email message processing according to the teachings of the present invention;
FIGURE 3 is a block diagram of another embodiment of email message processing according to the teachings of the present invention;
FIGURES 4A through 4C are simplified block diagrams of exemplary schedule information database configurations according to the teachings of the present invention;
FIGURE 5 is a functional flow diagram of the system and method of email-based event scheduling according to the teachings of the present invention;
FIGURE 6 is a functional flow diagram of an embodiment of a remote tool assistance according to the teachings of the present invention;
FIGURE 7 is a flowchart of an embodiment of the remote tool assistance process according to the teachings of the present invention;
FIGURE 8 is a functional flow diagram of an embodiment of an auto-scheduler process according to the teachings of the present invention;
FIGURES 9 and 10 make up a flowchart of an embodiment of the auto-scheduler process according to the teachings of the present invention;
FIGURE 11 is a functional flow diagram of the auto-scheduler process according to the teachings of the present invention;
FIGURES 12 and 13 make up a flowchart of an embodiment of a conflict detector process according to the teachings of the present invention;
FIGURE 14 is a flowchart of an embodiment of a schedule override process according to the teachings of the present invention;
FIGURE 15 is a flowchart of an embodiment of an event cancellation process according to the teachings of the present invention;
FIGURE 16 is a flowchart of an embodiment of an event confirmation process according to the teachings of the present invention;
FIGURE 17 is a flowchart of an embodiment of an event withdrawal process according to the teachings of the present invention;
FIGURE 18 is a flowchart of an embodiment of a schedule report process according to the teachings of the present invention;
FIGURE 19 is a flowchart of an embodiment of a remote tool preference setting process according to the teachings of the present invention;
FIGURE 20 is an exemplary graphical user interface screen of an embodiment of service launcher according to the teachings of the present invention; and
FIGURE 21 is an exemplary graphical user interface screen of an embodiment of an edit preferences screen according to the teachings of the present invention.

### DETAILED DESCRIPTION OF THE INVENTION

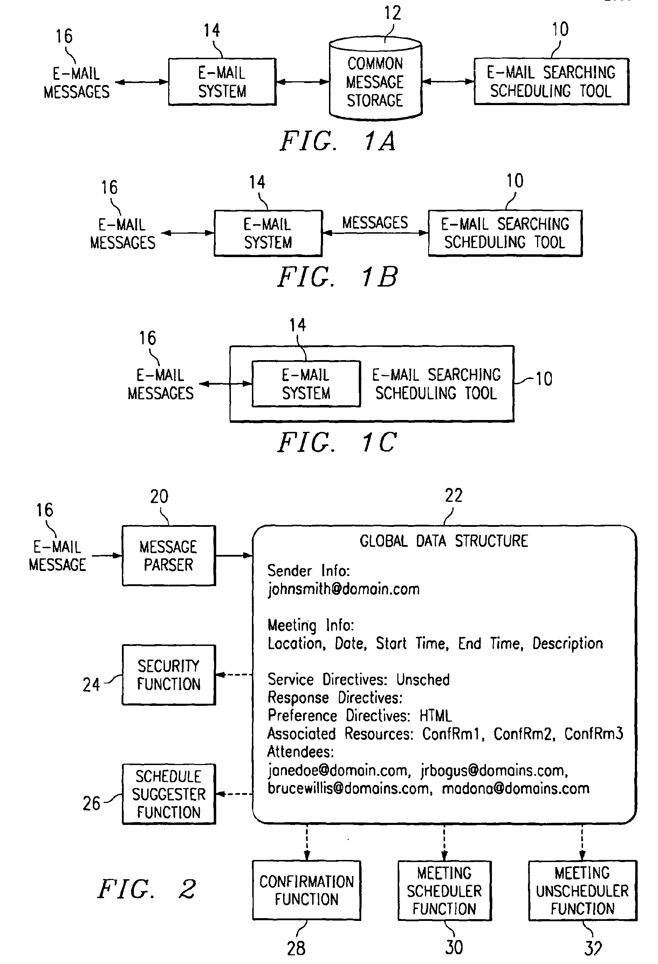

FIGURES 1A through 1C are simplified block diagrams of exemplary system configurations of the system and method of electronic mail-based event scheduling 10 according to the teachings of the present invention. System 10 operates with an e-mail system 14 in order to access e-mail messages 16 and to allow system 10 to send e-mail messages 16. System 10 receives scheduling information and inquiries from users via an e-mail interface and also sends scheduling information to users via the e-mail interface. Therefore, users do not have to have access to system 10 via a dedicated interface and a terminal session as required by conventional scheduling tools.

In FIGURE 1A, system 10 is operable to access a common message storage 12 which stores e-mail messages received by e-mail system 14. As shown in FIGURE 1B, system 10 may operate with a common or existing e-mail system 14 that receives e-mail messages and passes them on to system 10. System 10 also constructs e-mail messages and sends them via e-mail system 14. System 10 may also use or encompass a dedicated e-mail subsystem 14 that is part of system 10, as shown in FIGURE 1C.

FIGURE 2 is a block diagram of an embodiment of email message extraction process according to the teachings of the present invention. As an e-mail message is accessed by system 10, either received directly from e-mail system 14 or by accessing common message storage 12, it is first processed by a message parser 20. Message parser 20 is responsible for examining the contents of e-mail message 16 and extracting specific information stored in a global data structure 22, such as sender information (sender e-mail address), meeting information (location, date, start time, end time, description), associated resources (conference rooms), attendee information (attendee e-mail addresses), and one or more directives. The directives may include service directives, such as schedule an event, cancel an event, send remote tool assistance information, etc.; response directives, such as how system 10 should respond if a schedule conflict is found; and preference directives, such as to send mail in text or HTML (hypertext markup language) format. For example, the content of e-mail message 16 sent to system 10 to check a proposed event for schedule conflicts may include:
To: sched tool@terasystems.com
From: JohnDoe@terasystems.com
Subject: Schedule test

(Message Body)
sched_test
suggest_alt
sched_on_pass
text_mail

Title: Protocol Enhancement Design Meeting
Location: Conference Room 103
Date: October 5, 1999
Time: 9:00am-10:00am
Invitees:
   Buddy Love, Richard Kimble, James Bond, Eddie Kruger, Mrs. Doubtfire, William Wallace, Jack Ryan
Message parser 20 parses out and stores the data in the e-mail message according to global data structure 22. Message parser 20 is operable to recognize predetermined alphanumeric strings as directives. The directives, sched_test, suggest_alt, sched_on_pass, text mail, shown in the email message examples above, direct system 10 to carry out a variety of functions performed by one or more system functions, such as security function 24, schedule suggester function 26, confirmation function 28, meeting scheduler function 30, and meeting unscheduler function 32. For example, service directive "sched_test" directs system 10 to check the schedule information database for scheduling conflicts. Response directive "suggest_alt" directs system 10 to suggest alternative scheduling solutions as a response to finding a scheduling conflict. A second response directive "sched_on_pass" directs system 10 to automatically schedule the meeting with all invitees if no conflict was found. Preference directive "text_mail" indicates that the user prefers to send e-mail messages in text format. Other examples of directive functionality include perform security checks on the e-mail message such as authenticating the message sender, outgoing message recipients, or doing a virus scan; update the schedule information database for all affected individuals and resources for new or cancelled events and send the associated announcements; allow a user to withdraw from an event; reply with a schedule report for a user or resource; update the schedule information database as a result of an invited user's confirmation to a specific event; update tool preferences for a user based on received directives; provide general tool usage information upon request or automatically upon receipt of a message which failed to meet the system format requirements.

Global data structure is also referred to herein as a globally accessible record, which is a file that holds scheduling and other information extracted from an incoming e-mail message directing system 10 to carry out certain functions. The format and structure of globally accessible record may vary according to implementation.

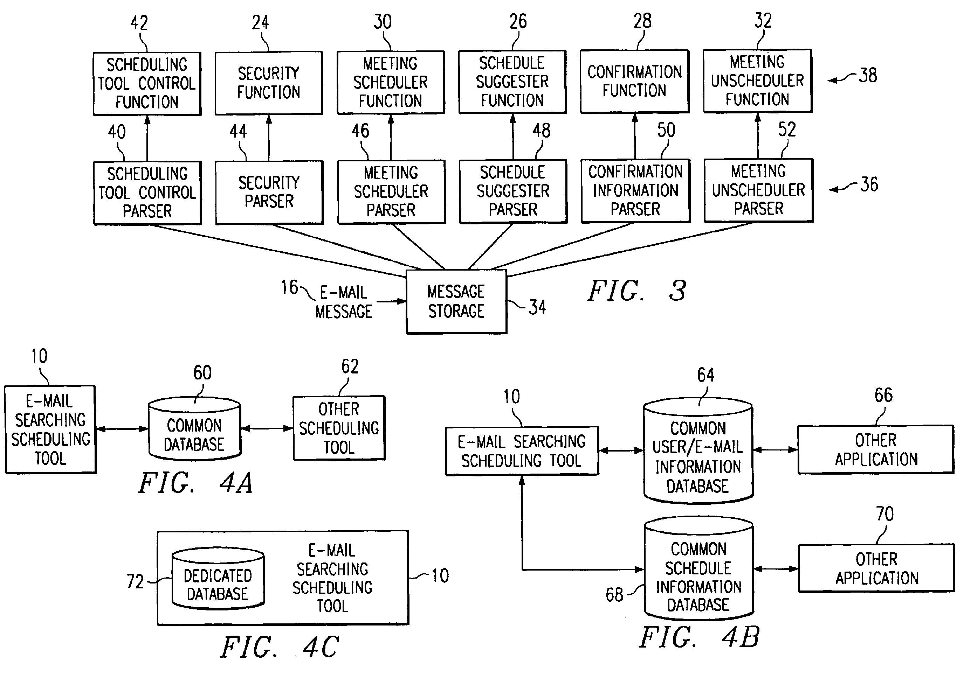

As an alternative to the message processing diagram shown in FIGURE 2, FIGURE 3 shows email message processing by dedicated parsers according to the teachings of the present invention. E-mail message 16 is received and stored in a message storage database 34, which is accessible by a number of dedicated message parsers 36 to provide information to a number of functions 38. The stored e-mail message is therefore parsed and data extracted therefrom on an as needed basis. For example, a scheduling tool control parser 40 may access message storage 34 to extract information and directives related to scheduling and to provide the extracted data to a scheduling tool control function 42. A security parser 44 may parse the message and extract information and/or directives related to or needed by a security function 24. A meeting scheduler parser 46 may parse the message and extract information and/or directives related to or needed by a meeting scheduler function 30. A schedule suggester parser 48 may parse the message and extract pertinent information and directives for a schedule suggester function 26. A confirmation information parser 50 may parse the message and extract pertinent information and directives for a confirmation function 28. A meeting unscheduler parser 52 may parse the message and extract pertinent information and directives for a meeting unscheduler function 32.

FIGURES 4A through 4C are simplified block diagrams of exemplary schedule information database configurations according to the teachings of the present invention. Referring to FIGURE 4A, system 10 is shown sharing a common database 60 with existing applications such as other scheduling tools 62. The database used by system 10 may be implemented in separate databases, where one is devoted to storing common user or e-mail information 64 and shared with one or more other applications 66, and another database is devoted to storing common schedule information 68 and shared with one or more other applications 70, as shown in FIGURE 4B. Alternatively, e-mail-based event scheduling system 10 may use a dedicated database 72 for storing e-mail messages, user information, scheduling information, and other information, as shown in FIGURE 4C.

In particular, the schedule information database of system 10 includes several types of records that can be accessed by system 10. Each record type may contain a logical set of related information. Some records contain references to other database records, which can be of a similar or different record type. For example, a user information record preferably contains information about the identity, preferences, and role or access privileges of each user authorized to use the tool. The record may contain data fields such as name, system user identity, user's role (tool administrator or common user), e-mail addresses, details about the e-mail addresses (input sending allowed, output receiving allowed, HTML or text preferred, etc.), individual preference settings and defaults to customize the tool behavior and environment, a list of resources that the user may schedule, and other possible information such as the user's host machine or the location of a user's schedule record(s). One possible variation from the above example is to have the list of resources that a user could schedule in a separate record of another possible record type, and have a data field in the user information record that contains references or pointers to one or more of these resource list records. This could conserve database space and possibly simplify resource association by allowing resource list records to be shared by multiple users that have a common group of resources that can be scheduled, such as all users in a certain building.

The resource records preferably contain information about a resource that can be scheduled. The resource record contains data fields for each resource, including name, capacity, restriction indicators (who has authorization to schedule, who can participate in events, etc.), name of the resource administrator, other possible resource attributes (teleconference capability, video conference capability, etc.), and the location of associated schedule record(s).

The schedule records are records that contain information about the schedule of a user or a resource. The information indicates the scheduled events and the affected time periods in the schedule. Schedule record may be implemented as one record that contains all schedule information for a user or resource. Schedule record may also be implemented such that each schedule record represents one event for a user or resource, where the records are used as an associated group (such as a linked list) to represent a schedule. The schedule records can contain event information or references to event records that contain event information. The start time, stop time, and event title for each event is contained in schedule records and/or an event records referenced by schedule records.

An event record contains information about a specific event. Some implementations may not require the use of event records if the event information is included entirely in the schedule records. The event record may contain the start time, stop time, event title, and possibly an event description. Depending on the implementation, event records may also contain information such as a participant list, a confirmation flag for each participant, and pointers to affected schedule records. This information may be useful for implementations that support services that require multiple transactions related to a scheduled event. For example, if an event needs to be cancelled, an event record allows system 10 to quickly determine the affected users and resources. The associated schedule records can be located quickly and updated or deleted, whichever is applicable. If a user has his confirmation flag for a cancelled event set to the unconfirmed state, no database updates are necessary for that user since his schedule has not been updated to include the event.

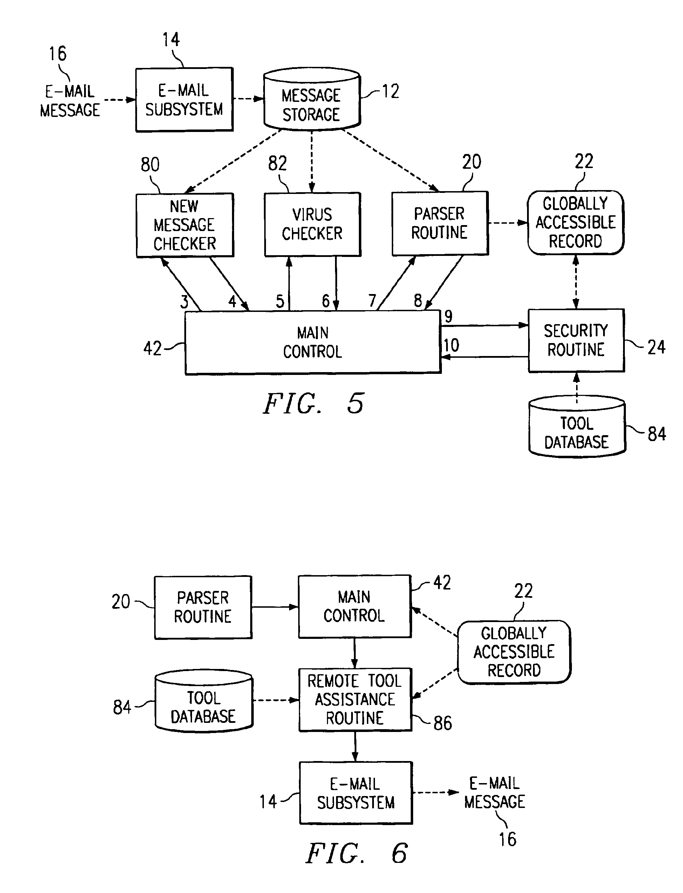

FIGURE 5 is a functional flow diagram of the system and method of email-based event scheduling according to the teachings of the present invention. As shown in FIGURE 5, e-mail message 16 initially enters e-mail system 14 and is stored in message storage 12 that is accessible by the e-mail-based event scheduling system of the present invention. A main controller 42 of system 10 calls a new message check routine 80 that monitors message storage 12 and checks for new messages. If one or more new messages are found, information is returned to main control program 42 about the location of the new messages. Main control program 42 then passes the message location information to a virus checker routine 82. Virus checker routine 82 scans the new messages for software viruses and deletes any messages that contain a virus. Virus checker 82 may also perform virus clean up operations on system memory.

After checking the messages for viruses, virus checker 82 returns information to main control program 42 about the status (clean or deleted) of each newly received message. Main control program 42 then calls a parser routine 20 to parse and extract information from each clean message. Parser routine 20 verifies that the e-mail message meets the predetermined format requirements to present information in a meaningful manner for system 10. Parser routine 20 builds a temporary working record or globally accessible record 22 that is accessible to system 10. Globally accessible record 22 is a structure that contains information extracted from the e-mail message which may include the message sender, service directives, response directives, preference directives, event definition information (where, when, who), and other possible information. Parser 20 returns information back to main controller 42 about the usability of each message and the location of its associated globally accessible record. Parser routine 20 may also be operable to set up default directives in globally accessible record 22 to direct the handling of an e-mail message that contains no directives. If parser 20 indicates that the e-mail message contains enough information to be usable to system 10, main control program 42 may call a security routine 24. Security routine 24 authenticates the required parsed information using information from schedule information database 84 to ensure that the message sender is an approved user. If any output messages are generated as a result of the e-mail message, the security routine authenticates the output recipients also by consulting schedule information database 84. Security program 24 may also add any required overhead information to globally accessible record 22 such as database pointers (in the case of a multiple database implementation) or schedule record location pointers for each involved user and resource. Security routine 24 then returns a validation report to main control program 42 to indicate whether the message information was successfully authenticated using schedule information database 84. At this point in the process, globally accessible record 22 contains enough data to meet the information requirements of all service routines of system 10.

If security routine 24 indicates that the e-mail message has been authenticated, main control program 42 continues processing based on the service directives found within the globally accessible record by calling the applicable service routines. Each service routine uses information from globally accessible record 22 to locate schedule information database information required to perform that service. Database information may include names, e-mail addresses, schedule data records, user preferences, a set of resources that can be scheduled by each user, global or individual working period boundaries (e.g., 8 A.M. to 5 P.M.), and any required overhead information such as database index records.

After all of the requested services for a message have been processed, globally accessible record 22 can be deleted because all information that needs to be retained is stored in database records. The functional flows of some possible service routines are described below.

FIGURE 6 is a functional flow diagram of an embodiment of a remote tool assistance according to the teachings of the present invention. Remote tool assistance 86 is a possible service that replies with usage, format, syntax, and general usage information in response to an authenticated user. Remote tool assistance 86 may be invoked in response to a service directive in a received e-mail message or as an automatic response to a received e-mail message that failed to meet the format requirements or contained too little information. Recall that parser 20 is operable to access the e-mail message and extract the needed information. When main control program 42 detects the remote assistance service directive in the received e-mail message or determines that the e-mail message fails to provide meaningful input, remote tool assistance 86 is called. Remote tool assistance 86 accesses schedule information database 84 to obtain the preferences of the message sender, and then generates an e-mail response message 16 to the sender that contains usage or help information. The e-mail response message may be sent directly by an e-mail subsystem 14 of system 10 or via another e-mail application. The e-mail response message may be tailored to contain information specific the user, such as the user's preferences, resource list, and default settings stored in schedule information database 84. Below is an example of an e-mail response message generated by remote tool assistance.
To: JohnDoe@terasystems.com
From: sched tool@terasystems.com
Subject: Re: Nonsense

Common Service Directive Syntax:
   Service_directive_string [parm 1] [parm n] [parm last]
   Each service directive string must be contained on a separate line with no other text (except parameters) within the e-mail message body. All service directive parameters must be included on the same line as the associated service directive string.
Common Response Directive Syntax:
   Each response directive string must be contained on a separate line with no other text (except parameters) within the e-mail message body. All response directive parameters must be included on the same line as the associated response directive string. Each response directive is associated with a specific service directive by its definition, and therefore, requires no special relative placement within the message body.
Service Directive sched_test:
   Request schedule comparison of included participants and resources.
Associated Response Directives:
   Suggest_alt: respond with alternative scheduling solutions for failed schedule validation (conflict detected)

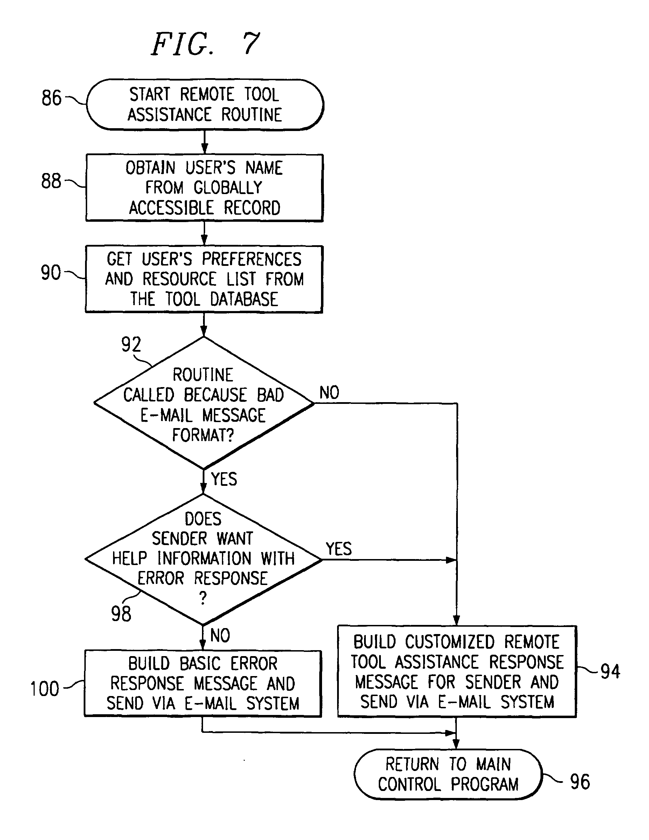

FIGURE 7 is a flowchart of an embodiment of the remote tool assistance process 86 according to the teachings of the present invention. Remote tool assistance 86 first reads the sender's name from the globally accessible record 22, as shown in block 88. The sender's preferences and resource list are obtained from the schedule information database 84, as shown in block 90. If remote tool assistance 86 was called as the result of a remote tool assistance service directive, as determined in block 92, an email message with a customized report is generated and sent that includes the tool usage syntax and information, the sender's tool preference settings, the sender's resource list, and other possible data that could assist the sender with using the tool, as shown in block 94. If remote tool assistance 86 was called as the result of a received email message that is unusable by the tool, as determined in block 92, and the sender's preference setting indicates that customized tool assistance information be included in the error message response, as determined in block 98, an email message with a customized report is generated and sent, as shown in block 94. If the sender does not prefer to include customized tool help information in the error response, as determined in block 98, an email message containing a basic error response is generated and sent, as shown in block 100. After sending the applicable email message response to the sender, the process returns to the main controller, as shown in block 96.

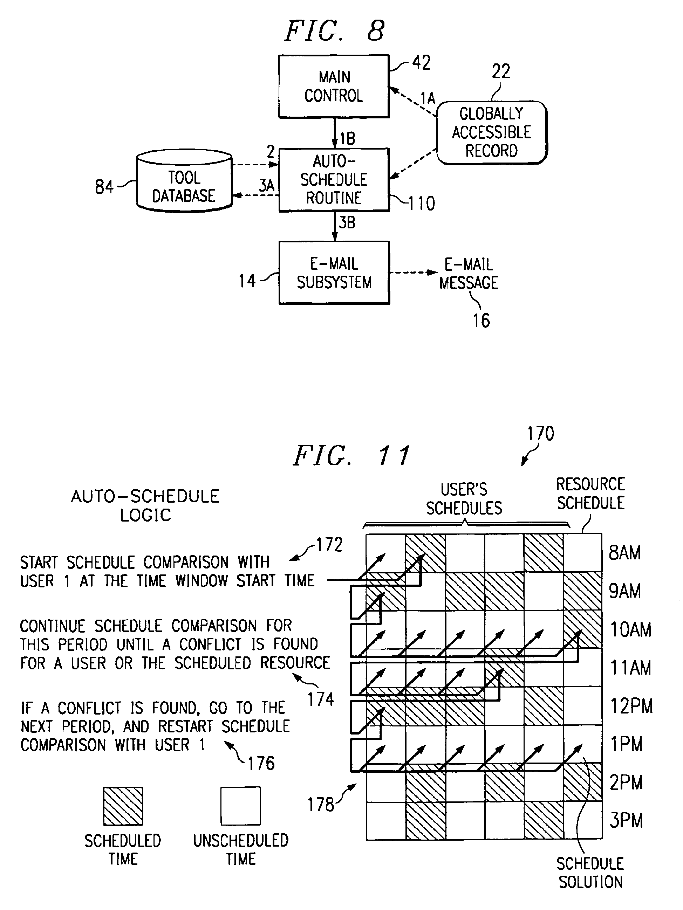

FIGURE 8 is a functional flow diagram of an embodiment of an auto-scheduler process 110 according to the teachings of the present invention. Auto-scheduler 110 is invoked by receiving an e-mail message that contains an auto-schedule service directive, a time window, a list of invited individuals, an optional list of resources (locations), and an event title and/or description. Main control program 42 calls auto-scheduler 110 as directed by the service directive stored in globally accessible record 22. Auto-scheduler 110 uses schedule information database 84 to cross check the availability of the invited individuals and the allowable resources for the specified time window until a solution is found. Upon the determination of a successful solution, auto-scheduler 110 updates every invitee's schedule in schedule information database 84, schedules the resource, and sends out the event announcements with the date/time, location, list of invitees, and event description. Auto-scheduler 110 frees the user from having to manually compare the schedules of resources and individuals to arrive at a event schedule. Auto-scheduler may be set up as the default service for a user that is applied to a received message with no service directive. Default resources and time window values may also be used when these are not included in the e-mail message. For example, a received e-mail message that only has an invitation list could be processed as shown in FIGURE 8. Parser routine 20 fails to find an event title or description in the body of the e-mail message so it assumes that the e-mail subject is the event title while building globally accessible record 22. Parser 20 also fails to find any directives so it uses the default directives, which may have been configured on an individual or global basis. After parser 20 completes constructing globally accessible record 22, main control program 42 checks globally accessible record 22 and finds the default service directive (auto-schedule in this case) placed there by parser routine 20.

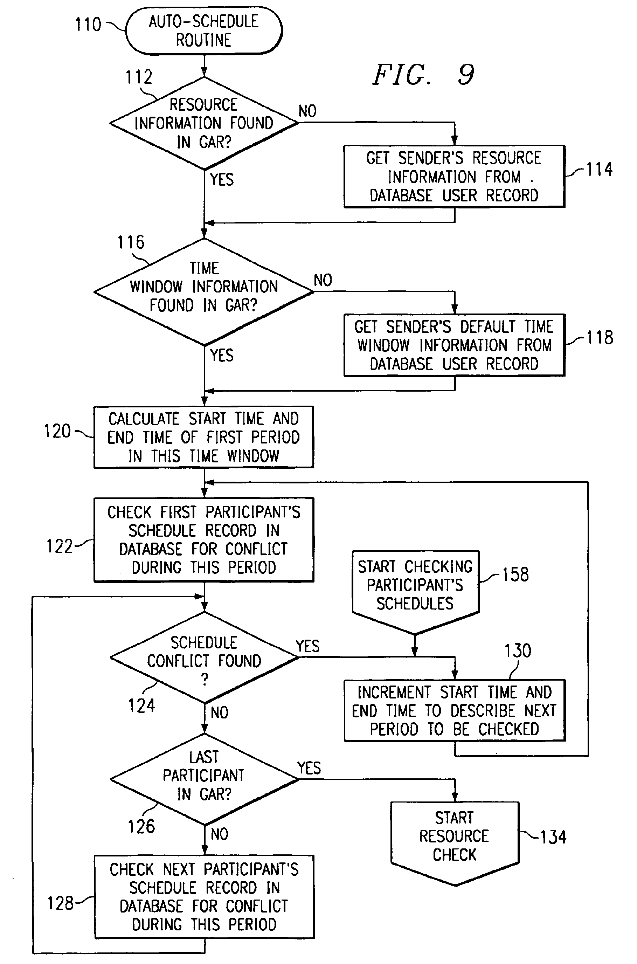

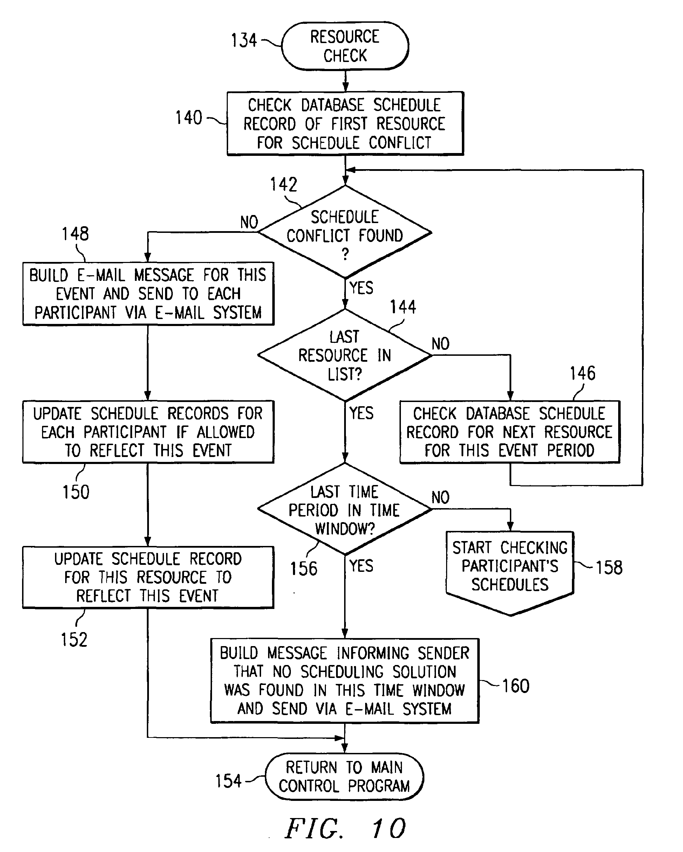

FIGURES 9 and 10 make up a flowchart of an embodiment of the auto-scheduler process 110 according to the teachings of the present invention. Referring to FIGURE 9, main control program 42 calls auto-scheduler 110 which first checks globally accessible record 22 for resource information, as shown in block 112. If no resource information is found, auto-scheduler 110 accesses schedule information database 84 to obtain the user's default resource information. Auto-scheduler 110 then checks globally accessible record 22 for a specific time window and event duration, as shown in block 116. If none is found, auto-scheduler 110 obtains the user's default time window information from schedule information database 84, as shown in block 118. Auto-scheduler 110 may determine that the default start time is the first hour boundary after 24 hours from the current time, for example. In the example shown in FIGURE 11, the message was received at 7:43 A.M. so the window start time is 8:00 A.M. the next day. Since no end time was specified, auto-scheduler may use the user's default period of one hour stored in schedule information database 84, and sets the end time to be one hour after the start time. Therefore, the start time and end time of the first period in the time window is determined, as shown in block 120. Auto-scheduler 110 then checks the schedule of each invited individual for conflicts during the time period defined by the start time and end time, as shown in blocks 122-128. If one or more individuals is not available during this hour, auto-scheduler 110 then increments both the start time and end time by one hour (while respecting normal work hour boundaries), as shown in block 130. The process continues until a period is found that is unscheduled by all of the invitees in block 134.

Referring to FIGURE 10, auto-scheduler 110 continues with resource scheduling 134. If no resource is listed, auto-scheduler 110 checks each resource (conference rooms in this case) associated with the sender as specified in schedule information database 84 until a resource is found that is available for that period, as shown in blocks 140-146. If none is available during that period, the start time and end time are incremented again in block 130 in FIGURE 9 to check for participant schedule conflicts with the new time. Participant schedule checking and resource schedule checking are performed in this manner until a schedule solution is found as shown in FIGURE 11, or until the specified time window or a quit searching limit, if any, is exceeded, as determined in block 156. If no solution is found, an e-mail message is constructed to inform the sender that no scheduling solution was found in the time window, as shown in block 160. This message is sent to the sender.

Once a solution is found, an announcement e-mail message is built and sent to the sender (if not specified as self excluded) and invited individuals, as shown in block 148. The announcement e-mail message contains the event title, location, date, start time, end time, and a unique event identifier. The database schedule records for the scheduled resource and invited individuals (if allowed) are updated as well, as shown in blocks 150 and 152.

The event identifier is an event identification mechanism which may be an alphanumeric string that is assigned as part of the event scheduling process. Each event scheduled by system 10 has an event record stored in the database that contains enough information to locate all other database records (for the individuals and/or resources) related to that event. The unique event identifier is used by system 10 to locate the event record. The unique event identifier is included in the e-mailed event announcements so that users may use it to refer to a particular event in any later transactions related to that event.

An additional design consideration is to have a capacity indicator for each resource in schedule information database 84. The capacity indicator is used as a factor in the auto-scheduling process. For example, if the resource has capacity to support an event involving ten or less individuals, and eleven or more participants are associated with the event, that resource is eliminated as a resource candidate for this event.

One possible preference directive is to be self-excluded from scheduled events. This allows an event scheduler such as a secretary or resource administrators who is not an event participant to schedule events using system 10. This avoids causing false scheduling conflicts that could occur for an individual who performs event scheduling on the behalf of others.

Conflict detector 190 of the present invention performs the schedule comparison work for the user. This is useful when a would-be event scheduler wants to validate a specific event that is to be scheduled at a certain time or any of a number of sporadic time periods. Conflict detector 190 may be invoked by sending e-mail messages to system 10 containing specific information for a proposed event and then checking the pass/fail response generated by conflict detector 190 until a schedule solution is found ("schedule fishing"). Therefore, conflict detector 190 provides the user more control than the auto-scheduler service. Another use for this service is to determine the number of conflicts that a scheduled event will produce. This is helpful when an event that involves a large audience is being planned, and it would be impossible to find a time slot that produces no schedule conflicts. Conflict detector 190 may be instructed to generate a report that suggests a time slot that would produce the least amount of conflicts to existing schedules.

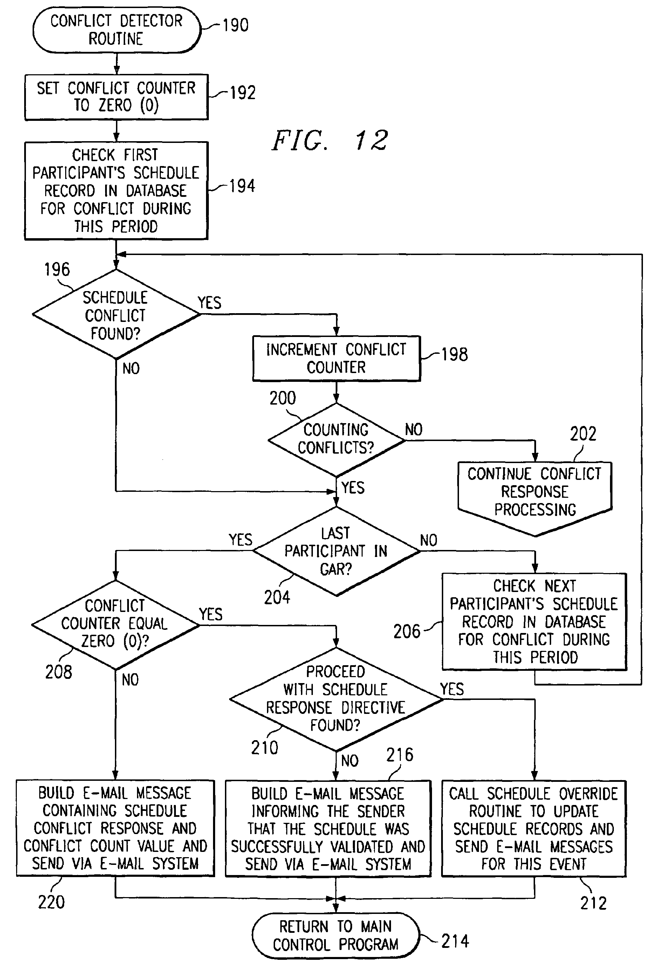

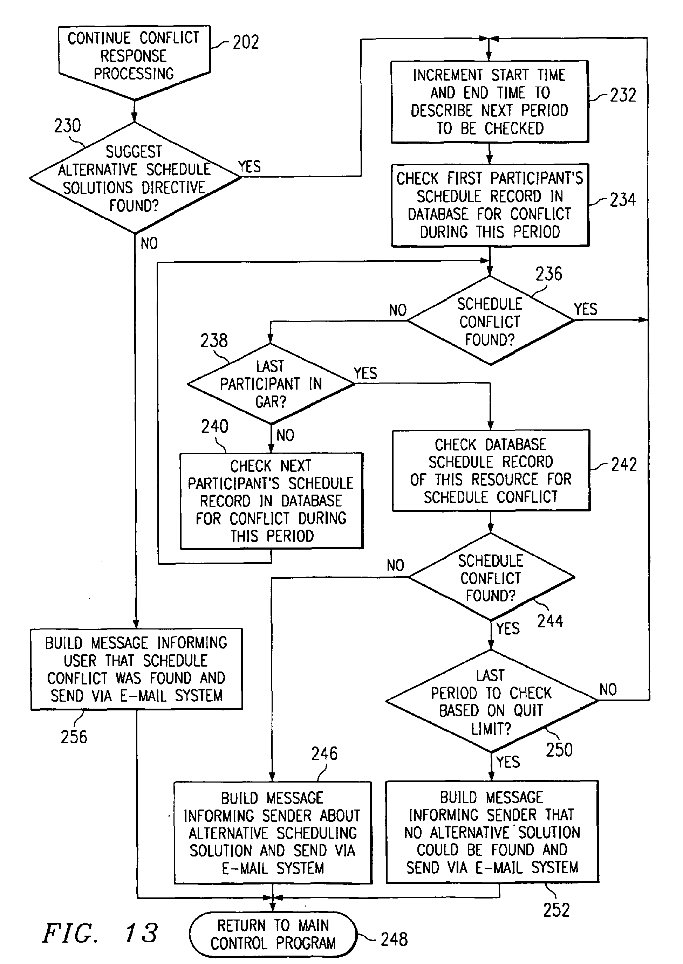

FIGURES 12 and 13 make up a flowchart of an embodiment of a conflict detector process 190 according to the teachings of the present invention. If an e-mail message contains a conflict detector service directive, main control program 42 calls conflict detector 190. Conflict detector 190 uses the event information in globally accessible record 22 associated with the message to check for the availability of all affected participants (invitees) and resources (conference room, labs, etc.) during the indicated time period. The end result of the conflict detector service depends on the validation outcome and any included response directives.

Referring to FIGURE 12, in block 192, a conflict counter is initialized to zero (0). Conflict detector 190 then checks the first participant's schedule record in schedule information database 84 for conflict during the specified period, as shown in block 194. If a schedule conflict is found, as determined in block 196, then the conflict counter is incremented in block 198. In block 200, a determination is made as to whether the user had indicated in a directive that he/she desires to know the number of conflicts found by conflict detector 190. If the user does desire this information, then in block 204, a check as to whether the last participant in the event has been reached. If there are still more participants to check, then the next participant's schedule record is checked for conflicts, as shown in block 206, and the process returns to block 196. If on the other hand the last participant has been reached, then whether the conflict counter value is zero is determined in block 208. If the conflict counter value is zero, then it is indicative that no conflict with any participant's schedule was found and the event time specified by the e-mail message sender is suitable for the specified event. In block 210, conflict detector determines whether a schedule response directive is contained in the received e-mail message. If such a directive is present, then a schedule override process is called to update the schedule records of the participants and resources to schedule the event, as shown in block 212. An e-mail message announcing the scheduled event is also sent to all participants. If the schedule response directive is not present in the received e-mail message, then an outgoing e-mail message is constructed to inform the received e-mail message sender that no conflict was found. The sender may then choose to send an e-mail message to system 10 to schedule the event. If, in block 208, it is determined that the conflict counter value is not zero, then an outgoing e-mail message is built containing a report on the schedule conflicts and the number of conflicts found, as shown in block 220. The process then returns to the main controller in block 214.

If, in block 200, it is determined that the number of conflicts is not sought out by the original e-mail sender, then execution proceeds to block 202 in FIGURE 13. In block 230, it is determined whether schedule response directives, such as to suggest alternative scheduling solutions, are found in the received e-mail message. If found, then the start time and end time of the specified period is incremented by an amount previously specified by the sender's preference, as shown in block 232. The first participant's schedule record is checked for conflicts during the new period, as shown in block 234. If a schedule conflict is found, as determined in block 236, then the start and end times of the time period is again incremented, as shown in block 232. This is repeated until no schedule conflict is found in block 236. If the participant is not the last participant in the globally accessible record, as determined in block 238, then the next participant's schedule record in the schedule information database is checked until all participants' schedules have been checked for conflicts. When the last participant's schedule has been checked and no conflict has been found for any of the participants with respect to the current proposed time period, then the schedule information database is checked for resource conflicts, as shown in block 242. If a schedule conflict was found for resources, as determined in block 244, then it is determined in block 250 whether the current period is the last period to be checked based on predetermined quit limits or user prescribed length of time in which to check. If the limit has not been reached, then execution loops back to block 232 to check the next time period. Otherwise, an e-mail message containing information that no alternative scheduling solution were found is prepared and sent to the sender of the received e-mail message, as shown in block 252. If in block 244, it is determined that no resource schedule conflict exists, then an e-mail message informing the sender of the alternative scheduling solution is prepared and sent via the e-mail system, as shown in block 246. Conflict detector then ends and execution returns to the main control program, as shown in block 248.

In addition to requesting alternative scheduling solutions, the response directive examined in block 230 may also request the resulting number of conflicts that would occur for the proposed event. The response directive could also simply request that response e-mail message be returned indicating that a conflict was found or not found.

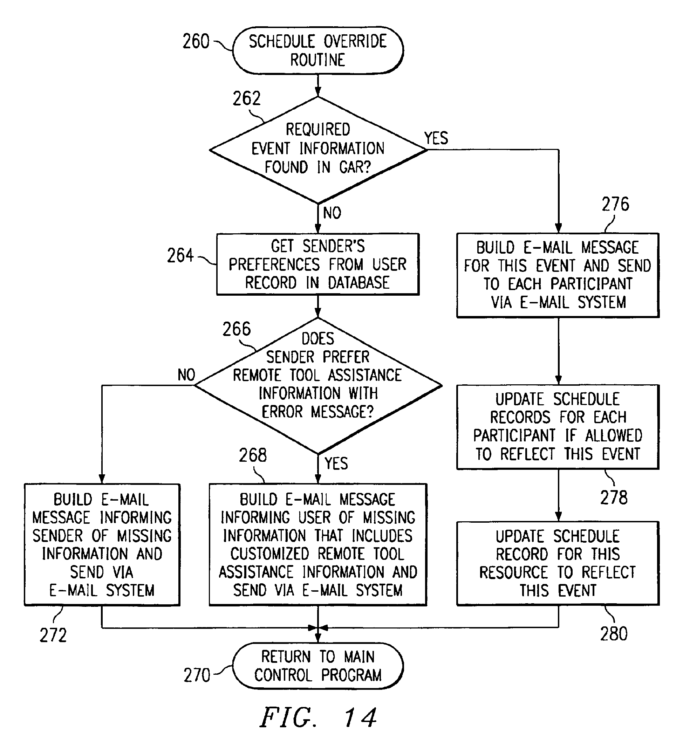

FIGURE 14 is a flowchart of an embodiment of a schedule override process 260 according to the teachings of the present invention. Schedule override 260 allows a user to schedule an event via e-mail regardless of schedule conflicts. This is useful for scheduling a high priority event. With this service, the user sends the announcement to the tool with the schedule override service directive. Main control program 42 calls the schedule override routine 260, which automatically sends the announcements and updates the schedule database for the scheduled resource and individuals (if allowed).

Referring to FIGURE 14, schedule override process 260 checks if information it needs to perform this service is present in the globally accessible record, as shown in block 262. If not, then schedule override 260 accesses the e-mail message sender's preferences from the scheduling information database, as shown in block 264. The sender's preference is then examined to determine whether the sender prefers remote tool assistance along with a notification of error in a response e-mail message, as shown in block 272, and an e-mail message is built according to the sender's preference and sent to the sender via the e-mail system, as shown in blocks 268 and 272. Execution then returns to the main control program, as shown in block 270.

If, in block 262, it is determined that the required information is found in the globally accessible record, then an e-mail message is constructed and sent to notify each event participant, as shown in block 276. Schedule override 260 then updates the schedule record of each participant to add this event, as shown in block 278. However, a participant's schedule is updated or modified only if the user allows it. These users may choose, as indicated by their preferences, to permit such schedule update only after their confirmation. For these individuals, they may confirm the change by simply replying back to the event announcement. System 10, upon receipt of this reply message, determines that it is a confirmation for an event schedule and updates the schedule accordingly.

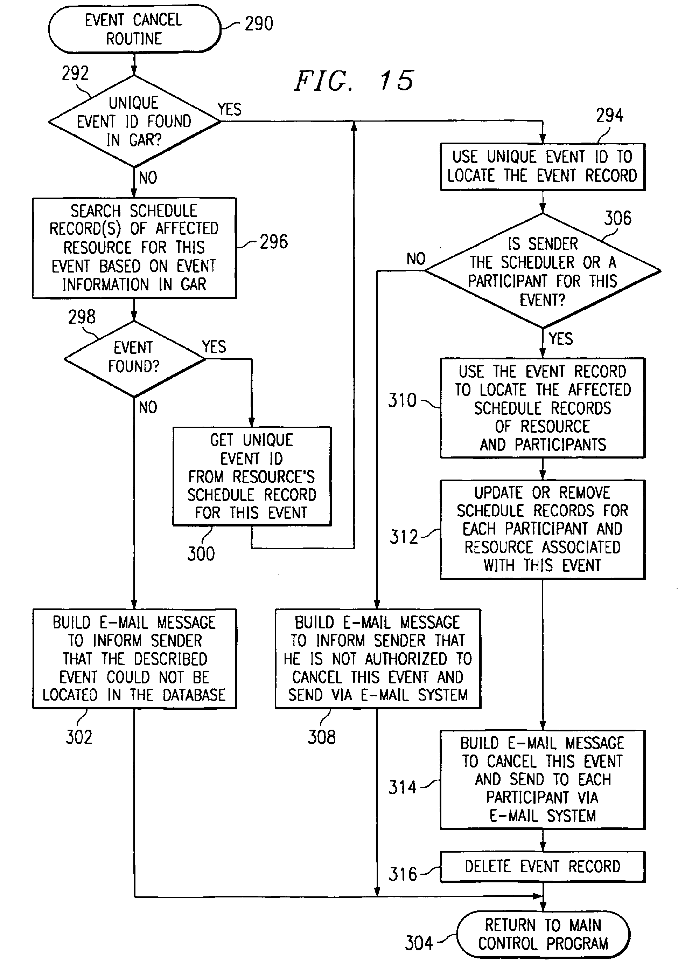

FIGURE 15 is a flowchart of an embodiment of an event cancellation process 290 according to the teachings of the present invention. The event cancel service allows an event to be cancelled via an e-mail message. The user sends an e-mail message to system 10 with an event cancel service directive and enough information to identify an event, such as a unique event identifier that is assigned to each scheduled event. The main control program calls the event cancel routine as a result of the event cancel service directive. Event cancel routine 290 first looks for the event identifier in the globally accessed record, as shown in block 292. If the event identifier is found, then the event identifier is used to locate the event record associated with the scheduled event in the schedule information database, as shown in block 294. Event canceller 290 then determines, by examining the event record, whether the sender of the event cancellation e-mail message is the scheduler or a participant of the event, as shown in block 306. If the sender is not the scheduler or a participant of the event, event canceller 290 may bar the message sender from canceling the event absent directives indicating that this sender has the authority to do so. An e-mail message containing a negative acknowledgment is then constructed to inform the message sender that he/she is not permitted to cancel this event and sent to the sender via the e-mail system, as shown in block 308. The execution then returns to the main control program in block 304.

If the sender of the event cancellation message is allowed to cancel the described event, as determined in block 306, event canceller locates and updates the affected database records for resource and participants, and sends the cancellation announcements via the e-mail system, as shown in blocks 310 and 312.

If, in block 292, it is determined that the event identifier is not found in the globally accessible record, then the schedule information database may be searched to locate a schedule event that matched the event information that are found in the globally accessible record, as shown in block 296. If the event is found, as determined in block 298, then the event identifier contained in the resource schedule record is used to locate the event record in the database, as shown in blocks 300 and 294. If the event cannot be located, then an e-mail message is constructed and sent to the sender of the event cancellation message to inform him/her of this fact.

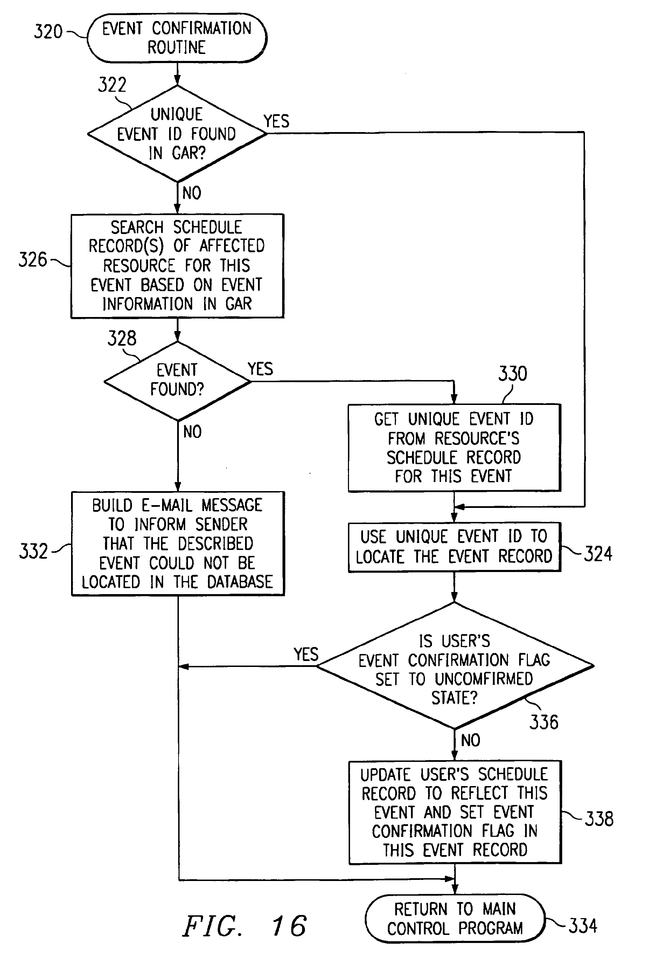

FIGURE 16 is a flowchart of an embodiment of an event confirmation process 320 according to the teachings of the present invention. Event confirmation service 320 allows a user to control updates to their schedule record(s) by only allowing events to be self-scheduled either directly or as a result of confirming an invitation to an event. First, the user enables this option as a preference either by sending an e-mail message with the appropriate preference directive and parameter(s). When an event is scheduled with the event confirmation service enabled, the user receives an e-mailed announcement as always, but the database remains unaffected until the user replies to the e-mailed announcement.

When the user with the event confirmation service preference enabled, the event invitation or announcement contained in the user's reply thereto includes the event identifier. When system 10 receives the reply, the main control program calls event confirmation routine 320. Event confirmation routine 320 uses the unique event identifier in the e-mail message (and later stored in the globally accessible record) to locate the particular event record, as shown in blocks 322 and 324. The information from the event record is then used to locate and update the reply message sender's scheduling record for this event if the sender's event confirmation flag is set to unconfirmed state for this event, as shown in blocks 336 and 338. The event confirmation flag for the particular event is then set, as shown in block 338. The user's event confirmation flag is set to prevent the generation of additional schedule records related to this event for this user caused by any inadvertently-sent duplicative reply. The event confirmation flag is also used by system 10 to determine which schedule records are in need of update in the case of a cancelled event.

If the event identifier is not found in the globally accessible record as determined in block 322, the schedule records of affected resources for this event is searched to identify the event, as shown in block 326. If the event cannot be identified, then an e-mail message containing a negative acknowledge is constructed and sent to the sender, as shown in block 332. Execution then returns to the main control program, as shown in block 334.

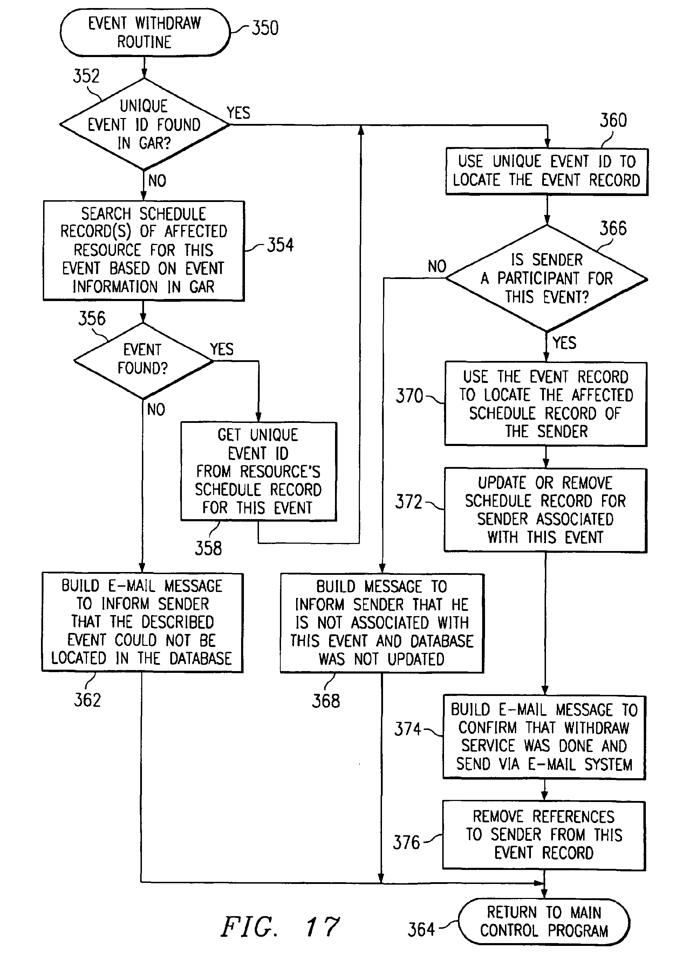

FIGURE 17 is a flowchart of an embodiment of an event withdrawal process 350 according to the teachings of the present invention. Event withdraw service 350 allows a user to remove a scheduled event from his own schedule by sending system 10 an e-mail message. The e-mail message contains an event withdraw service directive and sufficient information to identify an event such as the event identifier. The main control program calls event withdraw routine 350 as a result of detecting the event withdraw service directive. In block 352, event withdraw process 350 looks for the unique event identifier in the globally accessible record. If the event identifier is not found, then the schedule record of the affected resource for the event are searched to identify the event, as shown in block 354. If the event is still not found, a negative acknowledgement contained in an e-mail message is sent to the sender of the event withdraw message, as shown in block 362. If the event can be identified from the resource schedule records, the event identifier is obtained and used to continue processing the event withdraw e-mail message, as shown in block 358.

Event withdraw routine 350 uses the event identification information from the message in the globally accessible record to locate the related event record, as shown in block 360. Event withdraw 350 first verifies that the sender of the message is a participant in the event, as shown in block 366. If not, an e-mail message is prepared and sent to the sender of the event withdraw message to notify the sender that he/she is not a participant of the identified event, as shown in block 368.

If the sender is a participant, then the event record is used to locate the schedule record of this sender, which is then updated to delete the event therefrom, as shown in blocks 370 and 372. A positive acknowledgement e-mail message is then sent to the sender and the event scheduler, if they are different individuals, via the e-mail system, as shown in block 374. The event record for the event is also updated to remove the sender as a participant in this event, as shown in block 376. Execution then returns to the main program, as shown in block 364.

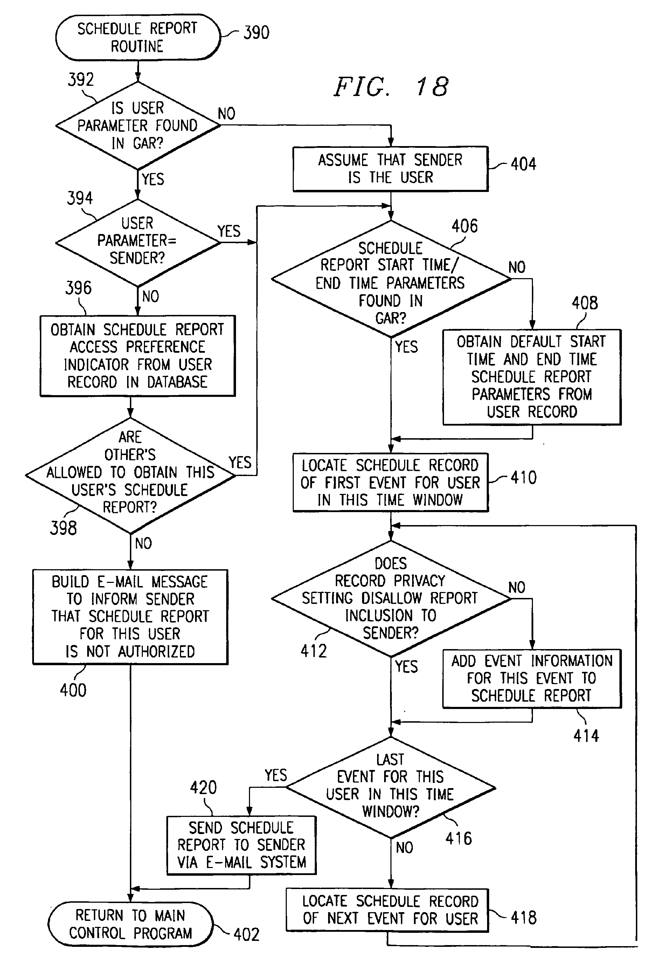

FIGURE 18 is a flowchart of an embodiment of a schedule report process 390 according to the teachings of the present invention. Schedule report service 390 allows a user to obtain his/her own schedule, resource schedule information, or schedule information for another user (if authorized) via an e-mail message. The service is invoked by sending an e-mail message to system 10 that includes a schedule report service directive and some optional associated parameters. The main control program calls schedule report routine 390 as directed by the service directive. Schedule report routine 390 first checks the user parameters associated with the schedule report service directive in the globally accessible record, as shown in block 392. If the user parameters indicate that the requested report is for another user or a resource, as determined in block 394, the schedule report routine determines whether the associated privacy settings allow that information to be reported to this user (the message sender), as shown in blocks 396 and 398. If no user or resource parameters were specified, as determined in block 392, the schedule of the sender is assumed, as shown in block 404. If schedule reporter 390 determines that this schedule information can be mailed to the requester (report request message sender), as determined in block 412, it generates a schedule report from the database records for the specified time period specified in the schedule report e-mail message (and stored in the globally accessible record) or a default period, as shown in blocks 406-410. Events may also have individual privacy settings. In this case, any schedule record for a private event is only included in a report sent to the record owner, as shown in blocks 412 and 414.

The schedule report service may be set up by the user to occur automatically on a periodic basis (such as sending a weekly agenda every Sunday night), or prepared and sent on demand.

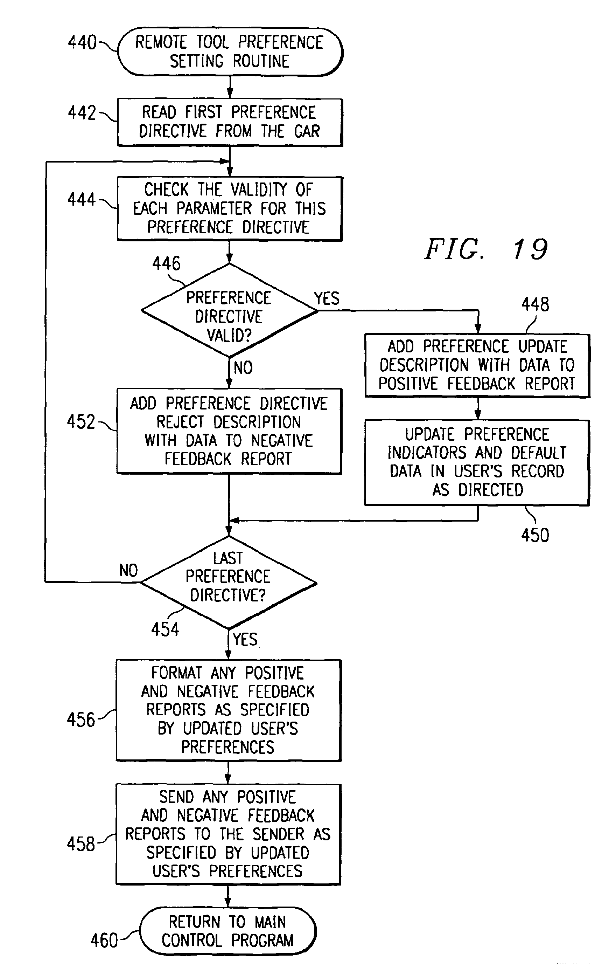

FIGURE 19 is a flowchart of an embodiment of a remote tool preference setting process 440 according to the teachings of the present invention. E-mail-based event scheduling system 10 offers many preferences for each individual user. E-mail messages may be used to remotely change the preferences for a user. For example, the user may include a preference directive within an e-mail message to direct the tool to send all future mail to this user in HTML or text format. The preference directive can be sent to the tool in a dedicated e-mail message, or included in a message that invoked other services. Preference directives can be thought of as service directives that only affect user preference settings and defaults rather than invoking services. When system 10 processes a preference directive, it calls the remote tool preference setting routine 440. In block 442, the first preference directive is read from the globally accessible record. The validity of the parameters for the preference directive is checked, as shown in block 444. If the preference directive is valid, as determined in block 446, then the preference update description is added to a positive feedback report, as shown in block 448, and the preference indicators and default data are updated in the message sender's record, as shown in block 450. If the preference directive is not valid, then the description of this preference directive is added to a negative feedback report, as shown in block 452. In block 454, the globally accessible record is checked to determine whether all preference directives have been processed. If not, execution loops back to block 442 to process the next preference directive. If all the preference directives have been processed, the positive and negative feedback reports are formatted as specified by the user's updated preferences, if applicable, and sent to the user in a manner according to the user's updated preferences, as shown in blocks 456 and 458. Execution then returns to the main control program, a shown in block 460.

Below is a list of some possible preferences that could be updated remotely:
- Send all future mail to this user in HTML format, Text format, or both
- Add new e-mail address for the user
- Delete an e-mail address for the user (the user must have at least one remaining e-mail address)
- Change the default receiving e-mail address for the user
- Set the default schedule report period parameter (such as today plus six days, this month, this week, today only)
- Start, stop, or modify an automatic periodic schedule report
- Change normal work day boundaries (don't schedule weekends, or between 6:00 P.M. and 8:00 A.M. weekdays, or between noon and 1:00 P.M. weekdays)
- Start, stop, or set up a vacation response for a specified period
- Set the default auto-schedule event duration (such as half hour, one hour, or two hours)
- Set the default auto-schedule start (such as next hour boundary, next half hour boundary, next hour boundary plus 24 hours, next hour boundary plus 48 hours, etc.)
- Set the default auto-schedule quit limit (give up and notify user if no solution found in one week, two weeks, N days, etc.)
- Set the preferred date/time formats (for announcements sent to user from the tool)
- Set the preferred error response behavior (send remote tool assistance information or just a negative acknowledgement)

Many computers that host an e-mail client application also host an internet browser application, such as MS Internet Explorer^{®} or Netscape Navigator^{®}. Therefore, e-mail-based event scheduling system and method may include an associated CGI program and browser form that functions as a template to help users generate an e-mail message that meets the format and syntax requirements of system 10.

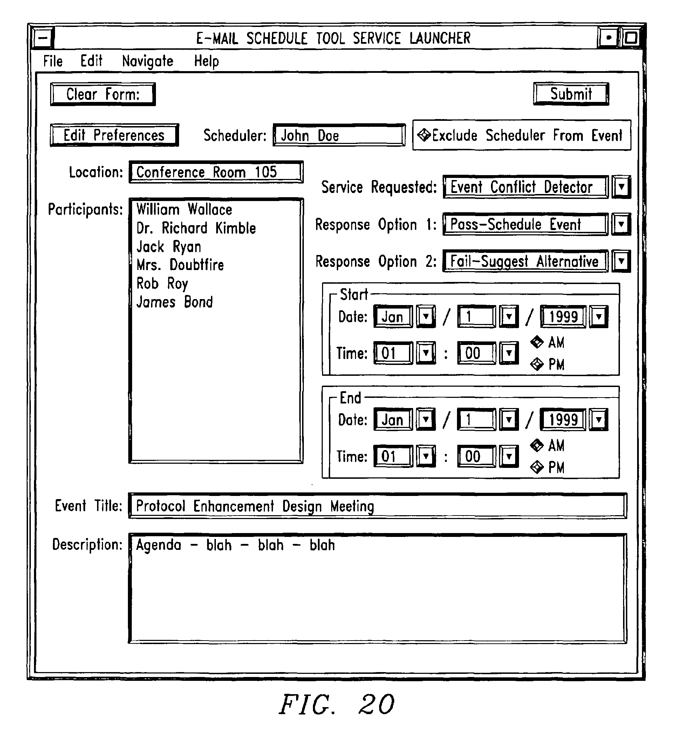

FIGURE 20 is an exemplary graphical user interface screen of an embodiment of the service launcher according to the teachings of the present invention. A web browser form, such as the example shown in FIGURE 20, can provide text entry fields that are each dedicated to a particular message item such as the event title, event description, event location, scheduler, and list of participants. For message items that have a limited set of possible values such as start time, end time, service directives, and response directives, the use of controls (buttons, switches, and menus) may be utilized. Controls limit the user input choices to logical combinations such as only presenting the response directive choices that are associated with the concerned service directive. Controls can also enforce formatting such as for date/time information.

After completing the form, the user submits the form by clicking the Submit button. The form may contain logic to respond with an error message for certain error conditions such as missing data for a required data field or a start time that is later than the end time. When the form is submitted successfully, the data is passed to a CGI program, which generates the e-mail message based on the form data, and sends it, via the e-mail system, to the main control program of system 10. System 10 processes browser-generated e-mail messages like all others.

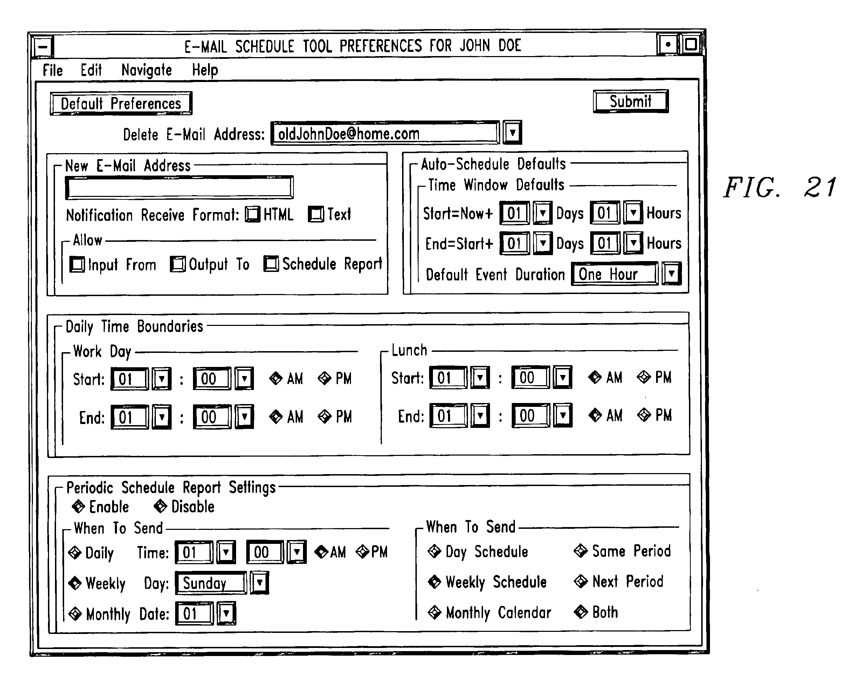

It is also possible to have the browser form display information stored in the schedule information database. For example, if a user clicks on the Edit Preferences button on the form shown in FIGURE 20 after typing his name in the Scheduler field, a new form appears such as shown in FIGURE 21. This form displays current preferences and defaults for the user/scheduler. The user can examine and modify his/her current preferences using this form. Once again, when the form is submitted, the data is passed to a CGI program, which generates the e-mail message containing preference directives based on the form data, and sends it to system 10 to be processed.

## Claims

1. An electronic mail-based event scheduling system (10), comprising:
- a message parser (20) accessing an electronic mail message (16) received from a sender, extracting scheduling information therefrom, and storing the extracted scheduling information in a predetermined format in a globally accessible record (22);
- the globally accessible record (22) storing extracted scheduling information including event scheduler data, event data, resource data, and participant data;
- a schedule information database (84); and
- an event processing function accessing the globally accessible record (22) and the schedule information database (84);
**characterized in that**
- the event processing function comprises an auto-scheduler (110) accessing the globally accessible record (22), obtaining a time window, determining a start time and an end time of a first time period in the time window, checking for scheduling conflicts with the participants and resources during the first time period;
- wherein, if a scheduling conflict is found, the auto-scheduler (110) is adapted for incrementing both the start time and the end time, and schedule checking is repeated, the schedule checking being terminated if a schedule solution is found;
- with the auto-scheduler (110) further scheduling an event by storing event data in the schedule information database (84), and preparing and sending an electronic mail message to each event participant announcing the scheduled event.

2. The system, as set forth in claim 1, wherein the event processing function comprises an event scheduler accessing the globally accessible record, scheduling an event according to the extracted scheduling information, and storing information associated with the scheduled event in the schedule information database, the event scheduler further preparing and sending an outgoing electronic mail message to the sender and any affected event participant to acknowledge and report the scheduled event.

3. The system, as set forth in claim 2, wherein the schedule information database comprises:
- a user schedule record for each user of the system containing scheduled events for the user; and
- a resource schedule record for each resource containing scheduled events for the resource.

4. The system, as set forth in claim 2, wherein the schedule information database comprises a user information record for each user of the system containing user identity, preferences, and access privileges of the user.

5. The system, as set forth in claim 2, wherein the schedule information database comprises an event record for each scheduled event containing an event identifier, event time data, participant data, and resource data.

6. The system, as set forth in any one of claims 1 to 5, wherein the event processing function comprises a conflict detector accessing the globally accessible record, obtaining a time period, checking for scheduling conflicts within the time period with the participants and resources, and preparing and sending an electronic mail to the sender reporting scheduling conflict data.

7. The system, as set forth in any one of claims 1 to 6, wherein the event processing function comprises a schedule overrider accessing the globally accessible record, scheduling an event by storing event data in the schedule information database regardless of participant schedule conflict, and preparing and sending an electronic mail message to each event participant announcing the scheduled event.

8. The system, as set forth in any one of claims 1to 7, wherein the event processing function comprises an event canceller accessing the globally accessible record, removing the scheduled event from the schedule information database, and preparing and sending an electronic mail message to each event participant announcing event cancellation.

9. The system, as set forth in any one of claims 1 to 8, wherein the event processing function comprises an event confirmer accessing the globally accessible record, locating, in the schedule information database, data associated with the scheduled event described therein, confirming the sender's participation in the scheduled event, and preparing and sending an electronic mail message to the sender acknowledging and reporting the event confirmation.

10. The system, as set forth in any one of claims 1 to 9, wherein the event processing function comprises an event withdraw process accessing the globally accessible record, locating, in the schedule information database, data associated with the scheduled event described therein, removing the sender as a participant in the scheduled event, and preparing and sending an electronic mail message to the sender acknowledging and reporting the event withdrawal.

11. The system, as set forth in any one of claims 1to 10, wherein the event processing function comprises a schedule reporter accessing the globally accessible record, locating, in the schedule information database, schedule data associated with the sender, and preparing and sending an electronic mail message to the sender containing the user's scheduled events.

12. The system, as set forth in any one of claims 1 to 11, wherein the event processing function comprises a remote preference setter accessing the globally accessible record, locating, in the schedule information database, preference data associated with the sender, updating the sender's preference data in the schedule information database, and preparing and sending an electronic mail message to the sender reporting on the success and failure of preference updates.

13. The system, as set forth in any one of claims 1 to 12, wherein the event processing function comprises a remote tool assistance accessing the globally accessible record, locating, in the schedule information database, preference data associated with the sender, and preparing and sending an electronic mail message to the sender containing help information in response to the data in the globally accessible record and the preference data.

14. The system, as set forth in any one of claims 1 to 13, further comprising:
- a message database storing electronic mail messages destined for the system sent by the sender; and
- a new message checker scanning the message database for new messages.

15. The system, as set forth in claim 14, further comprising a virus checker checking for electronic viruses in the electronic mail messages in the message database.

16. The system, as set forth in claim 14, further comprising a security checker verifying that the sender is an authorized user of the system.

17. The system, as set forth in any one of claims 1 to 16, further comprising a browser-based graphical user interface having a data entry form operable to receive user input and prepare an electronic mail message containing the user input according to predetermined syntax and format requirements.

18. The system, as set forth in any one of claims 1 to 17, wherein the schedule checking is being terminated if the specified time window is exceeded.

19. The system, as set forth in any one of claims 1 to 18, wherein the schedule checking is being terminated if a quit searching limit is exceeded.

20. A method of electronic mail-based event scheduling, comprising:
- receiving an electronic mail message (16) sent by a sender to a predetermined event scheduling system address;
- parsing the electronic mail message (16) to extract scheduling information therefrom, including event scheduler data, event data, resource data, and participant data;
- processing the extracted scheduling information and accessing schedule information stored in a schedule information database (84),
**characterized in that** said processing the scheduling information comprises:
- accessing a globally accessible record (22) storing extracted scheduling information;
- obtaining a time window;
- determining (120) a start time and an end time of a first time period in the time window;
- checking for scheduling conflicts with the participants and resources during the first time period;
- wherein, if a scheduling conflict is found, incrementing (130) both the start time and the end time, and repeating schedule checking, the schedule checking being terminated if a schedule solution is found;
- scheduling an event by storing event data in the schedule information database (84); and
- preparing and sending an electronic mail message to each event participant announcing the scheduled event.

21. The method, as set forth in claim 20, wherein processing the scheduling information comprises:
- accessing a globally accessible record storing extracted scheduling information;
- scheduling an ,event according to the extracted scheduling information;
- storing information associated with the scheduled event in the schedule information database; and
- preparing and sending an outgoing electronic mail message to the sender and any affected event participant to acknowledge and report the scheduled event.

22. The method, as set forth in claim 20 or claim 21, wherein processing the scheduling information comprises:
- accessing a globally accessible record storing extracted scheduling information;
- obtaining a time period;
- checking for scheduling conflicts within the time period with the participants and resources; and
- preparing and sending an electronic mail to the sender reporting scheduling conflict data.

23. The method, as set forth in any one of claims 20 to 22, wherein processing the scheduling information comprises:
- accessing a globally accessible record storing extracted scheduling information;
- scheduling an event by storing event data in the schedule information database regardless of participant schedule conflict; and
- preparing and sending an electronic mail message to each event participant announcing the scheduled event.

24. The method, as set forth in any one of claims 20 to 23, wherein processing the scheduling information comprises:
- accessing a globally accessible record storing extracted scheduling information;
- removing the scheduled event from the schedule information database; and
- preparing and sending an electronic mail message to each event participant announcing event cancellation.

25. The method, as set forth in any one of claims 20 to 24, wherein processing the scheduling information comprises:
- accessing a globally accessible record storing extracted scheduling information;
- locating, in the schedule information database, data associated with the scheduled event described therein;
- confirming the sender's participation in the scheduled event; and
- preparing and sending an electronic mail message to the sender acknowledging and reporting the event confirmation.

26. The method, as set forth in any one of claims 20 to 25, wherein processing the scheduling information comprises:
- accessing a globally accessible record storing extracted scheduling information;
- locating, in the schedule information database, data associated with the scheduled event described therein;
- removing the sender as a participant in the scheduled event; and
- preparing and sending an electronic mail message to the sender acknowledging and reporting the event withdrawal.

27. The method, as set forth in any one of claims 20 to 26, wherein processing the scheduling information comprises:
- accessing a globally accessible record storing extracted scheduling information;
- locating, in the schedule information database, schedule data associated with the sender; and
- preparing and sending an electronic mail message to the sender containing the user's scheduled events.

28. The method, as set forth in any one of claims 20 to 27, wherein processing the scheduling information comprises:
- accessing a globally accessible record storing extracted scheduling information;
- locating, in the schedule information database, preference data associated with the sender;
- updating the sender's preference data in the schedule information database; and
- preparing and sending an electronic mail message to the sender reporting on the success and failure of preference updates.

29. The method, as set forth in any one of claims 20 to 28, wherein processing the scheduling information comprises:
- accessing a globally accessible record storing extracted scheduling information;
- locating, in the schedule information database, preference data associated with the sender; and
- preparing and sending an electronic mail message to the sender containing help information in response to the data in the globally accessible record and the preference data.

30. The method, as set forth in any one of claims 20 to 29, further comprising:
- storing electronic mail messages destined for the system sent by the sender in a message database; and
- scanning the message database for new messages.

31. The method, as set forth in claim 30, further comprising checking for electronic viruses in the electronic mail messages in the message database.

32. The method, as set forth in claim 30, further comprising verifying that the sender is an authorized user of the system.

33. The method, as set forth in any one of claims 20 to 32, wherein the schedule checking is being terminated if the specified time window is exceeded.

34. The method, as set forth in any one of claims 20 to 33, wherein the schedule checking is being terminated if a quit searching limit is exceeded.

## Patentansprüche

1. System (10) zur E-Mail-basierten Ereignisplanung (10), umfassend:
- Einen Nachrichten-Parser (20), welcher auf eine von einem Absender empfangene E-Mail-Nachricht (16) zugreift, Planungsinformationen daraus extrahiert und die extrahierten Planungsinformationen in einem vorbestimmten Format in einem global zugreifbaren Register (22) speicher;
- das global zugreifbare Register (22) zum Speichern der extrahierten Planungsinformationen einschließlich der Ereignisplanerdaten, Ereignisdaten, Ressourcendaten und Teilnehmerdaten;
- eine Planungsinformationsdatenbank (84); und
- eine Ereignisverarbeitungsfunktion, welche auf das global zugreifbare Register (22) und die Planungsinformationsdatenbank (84) zugreift;
**dadurch gekennzeichnet, dass**
- die Ereignisverarbeitungsfunktion einen Selbstplaner (110) umfasst, welcher auf das global zugreifbare Register (22) zugreift, ein Zeitfenster erhält, einen Startzeitpunkt und einen Endzeitpunkt der ersten Zeltspanne in dem Zeitfenster bestimmt und während der ersten Zeltspanne auf Planungskonflikte mit den Teilnehmern und Ressourcen prüft;
- wobei, wenn ein Planungskonflikt gefunden wird, der Selbstplaner (110) dazu ausgelegt ist, sowohl den Startzeitpunkt als auch den Endzeitpunkt zu inkrementieren, und die Planungsprüfung wiederholt wird, wobei die Planungsprüfung beendet ist, wenn eine Planungslösung gefunden wird;
- mit dem Selbstplaner (110) weiterhin ein Ereignis geplant wird, indem Ereignisdaten in der Planungsinformationsdatenbank (84) gespeichert werden, und eine E-Mail-Nachricht, welche das geplante Ereignis ankündigt, vorbereitet und an jeden Ereignisteilnehmer gesendet wird.

2. System nach Anspruch 1, wobei die Ereignisverarbeitungsfunktion einen Ereignisplaner umfasst, welcher auf das global zugreifbare Register zugreift, ein Ereignis gemäß den extrahierten Planungsinformationen plant und die mit dem geplanten Ereignis assoziierten Informationen in der Planungsinformationsdatenbank speichert, wobei der Ereignisplaner weiterhin eine ausgehende E-Mail-Nachricht vorbereitet und an den Absender und alle betroffenen Ereignisteilnehmer sendet, um das geplante Ereignis zu bestätigten und zu melden.

3. System nach Anspruch 2, wobei die Planungsinformationsdatenbank umfasst:
- ein Benutzerplanungsregister für jeden Benutzer des Systems, welches geplante Ereignisse für den Benutzter enthält; und
- ein Ressourcenplanungsregister für jede Ressource, welches geplante Ereignisse für die Ressource enthält.

4. System nach Anspruch 2, wobei die Planungsinformationsdatenbank ein Benutzerinformationsregister für jeden Benutzer des Systems umfasst, welches die Benutzeridentität, Präferenzen und Zugriffsrechte des Benutzers enthält.

5. System nach Anspruch 2, wobei die Planungsinformationsdatenbank ein Ereignisregister für jedes geplante Ereignis umfasst, welches eine Ereigniskennung, Ereigniszeitdaten, Teilnehmerdaten und Ressourcendaten enthält.

6. System nach einem beliebigen der Ansprüche 1 bis 5, wobei die Ereignisverarbeitungsfunktion einen Konfliktdetektor umfasst, welcher auf das global zugreifbare Register zugreift, eine Zeltspanne erhält, auf Planungskonflikte mit den Teilnehmern und Ressourcen innerhalb der Zeitspanne prüft und eine E-Mail, welche Planungskonfliktdaten meldet, vorbereitet und an den Absender sendet.

7. System nach einem beliebigen der Ansprüche 1 bis 6, wobei die Ereignisverarbeitungsfunktion einen Planungs-Overrider umfasst, welcher auf das global zugreifbare Register zugreift, ein Ereignis plant, indem er Ereignisdaten ungeachtet eines Teilnehmerplanungskonfliktes in der Planungsinformationsdatenbank speichert, und eine E-Mail-Nachricht, welche das geplante Ereignis ankündigt, vorbereitet und an jeden Ereignisteilnehmer sendet.

8. System nach einem beliebigen der Ansprüche 1 bis 7, wobei die Ereignisverarbeitungsfunktion einen Ereignisunterdrücker umfasst, welcher auf das global zugreifbare Register zugreift, das geplante Ereignis aus der Planungsinformationsdatenbank entfernt und eine E-Mail-Nachricht, welche die Ereignisunterdrückung ankündigt, vorbereitet und an jeden Ereignisteilnehmer sendet.

9. System nach einem beliebigen der Ansprüche 1 bis 8, wobei die Ereignisverarbeitungsfunktion einen Ereignisbestätiger umfasst, welcher auf das global zugreifbare Register zugreift, in der Planungsinformationsdatenbank Daten, die mit dem darin beschriebenen geplanten Ereignis assoziiert sind, lokalisiert, die Teilnahme des Absenders an dem geplanten Ereignis bestätigt und eine E-Mail-Nachricht, welche die Ereignisbestätigung quittiert, vorbereitet und an den Absender sendet.

10. System nach einem beliebigen der Ansprüche 1 bis 9, wobei die Ereignisverarbeitungsfunktion einen Ereignisabbruchprozess umfasst, welcher auf das global zugreifbare Register zugreift, in der Planungsinformationsdatenbank Daten, die mit dem darin beschriebenen geplanten Ereignis assoziiert sind, lokalisiert, den Absender als Teilnehmer an dem geplanten Ereignis entfernt und eine E-Mail-Nachricht, welche den Ereignisabbruch meldet, vorbereitet und an den Absender sendet.

11. System nach einem beliebigen der Ansprüche 1 bis 10, wobei die Ereignisverarbeitungsfunktion einen Planungsmelder umfasst, welcher auf das global zugreifbare Register zugreift, in der Planungsinformationsdatenbank Planungsdaten, die mit dem Absender assoziiert sind, lokalisiert, and eine E-Mail-Nachricht, welche die geplanten Ereignisse des Benutzers enthält, vorbereitet und an den Absender sendet.

12. System nach einem beliebigen der Ansprüche 1 bis 11, wobei die Ereignisverarbeitungsfunktion eine Präferenz-Ferneinstellvorrichtung umfasst, welche auf das global zugreifbare Register zugreift, in der Planungsinformationsdatenbank Präferenzdaten, die mit dem Absender assoziiert sind, lokalisiert, die Präferenzdaten des Absenders in der Planungsinformationsdatenbank aktualisiert und eine E-Mail-Nachricht, welche über den Erfolg oder das Fehlschlagen der Aktualisierung von Präferenzen berichtet, vorbereitet und an den Absender sendet.

13. System nach einem beliebigen der Ansprüche 1 bis 12, wobei die Ereignisverarbeitungsfunktion eine Tool-Fernunterstützung umfasst, welche auf das global zugreifbare Register zugreift, in der Planungsinformationsdatenbank Präferenzdaten, die mit dem Absender assoziiert sind, lokalisiert und eine E-Mail-Nachricht, welche Hilfsinformationen in Reaktion auf die Daten in dem global zugreifbaren Register und die Präferenzdaten enthält, vorbereitet und an den Absender sendet.

14. System nach einem beliebigen der Ansprüche 1 bis 13, weiterhin umfassend:
- Eine Nachrichtendatenbank zum Speichern von von dem Absender gesendeten E-Mail-Nachrichten, die für das System bestimmt sind; und
- einen Nachrichten-Checker, welcher die Nachrichtendatenbank nach neuen Nachrichten durchsucht.

15. System nach Anspruch 14, weiterhin umfassenden einen Virus-Checker, welcher die E-Mail-Nachrichten in der Nachrichtendatenbank auf elektronische Viren prüft.

16. System nach Anspruch 14, weiterhin umfassend einen Sicherheits-Checker, welcher prüft, dass der Absender ein berechtigter Benutzer des Systems ist.

17. System nach einem beliebigen der Ansprüche 1 bis 16, weiterhin umfassend eine Browser-basierte grafische Benutzeroberfläche in der Form einer Dateneingabeeinrichtung, welche betreibbar ist, um Benutzereingaben zu empfangen und eine E-Mail-Nachricht mit den Benutzereingaben gemäß vorbestimmten Syntax- und Formatanforderungen vorzubereiten.

18. System nach einem beliebigen der Ansprüche 1 bis 17, wobei die Planungsprüfung beendet wird, wenn das festgelegte Zeitfenster überschritten wird.

19. System nach einem beliebigen der Ansprüche 1 bis 18, wobei die Planungsprüfung beendet wird, wenn eine "Suche-abbrechen"-Grenze überschritten wird.

20. Verfahren zur E-Mail-basierten Ereignisplanung, umfassend:
- Empfangen einer von einem Absender an eine vorbestimmte Ereignisplanungssystem-Adresse gesendete E-Mail-Nachricht (16);
- Parsen der E-Mail-Nachricht (16), um Planungsinformationen einschließlich Ereignisplanerdaten, Ereignisdaten, Ressourcendaten und Teilnehmerdaten daraus zu extrahierten;
- Verarbeiten der extrahierten Planungsinformationen, und Zugreifen auf die in einer Planungsinformationsdatenbank (84) gespeicherten Planungsinformationen,
**dadurch gekennzeichnet, dass** die besagte Verarbeitung der Planungsinformationen umfasst:
- Zugreifen auf ein global zugreifbares Register (22), in welchem die extrahierten Planungsinformationen gespeichert werden;
- Erhalten eines Zeitfensters;
- Bestimmten (120) eines Startzeitpunkts und eines Endzeitpunkts einer ersten Zeltspanne in dem Zeitfenster;
- Prüfen auf Planungskonflikte mit den Teilnehmern und Ressourcen während der ersten Zeltspanne;
- wobei, wenn ein Planungskonflikt gefunden wird, sowohl der Startzeitpunkt als auch der Endzeitpunkt inkrementiert (130) und die Planungsprüfung wiederholt wird, wobei die Planungsprüfung beendet wird, wenn eine Planungslösung gefunden wurde;
- Planen eines Ereignisses durch Speichern von Ereignisdaten in der Planungsinformationsdatenbank (84); und
- Vorbereiten und Senden einer E-Mail-Nachricht, welche das geplante Ereignis ankündigt, an jeden Ereignisteilnehmer.

21. Verfahren nach Anspruch 20, wobei das Verarbeiten der Planungsinformationen umfasst:
- Zugreifen auf ein global zugreifbares Register, in welchem die extrahierten Planungsinformationen gespeichert sind;
- Planen eines Ereignisses gemäß den extrahierten Planungsinformationen;
- Speichern der mit dem geplanten Ereignis assoziierten Informationen in der Planungsinformationsdatenbank; und
- Vorbereiten und Senden einer ausgehenden E-Mail-Nachricht an den Absender und alle betroffenen Ereignisteilnehmer, um das geplante Ereignis zu bestätigen und zu melden.

22. Verfahren nach Anspruch 20 oder Anspruch 21, wobei das Verarbeiten der Planungsinformationen umfasst:
- Zugreifen auf ein global zugreifbares Register, in welchem die extrahierten Planungsinformationen gespeichert sind;
- Erhalten einer Zeitspanne;
- Prüfen auf Planungskonflikte mit den Teilnehmern und Ressourcen innerhalb der Zeitspanne; und
- Vorbereiten und Senden einer E-Mail an den Absender, um die Planungskonfliktdaten zu melden.

23. Verfahren nach einem beliebigen der Ansprüche 20 bis 22, wobei das Verarbeiten der Planungsinformationen umfasst:
- Zugreifen auf ein global zugreifbares Register, in welchem extrahierte Planungsinformationen gespeichert werden;
- Planen eines Ereignisses durch Speichern der Ereignisdaten in der Planungsinformationsdatenbank, ungeachtet eines Teilnehmerplanungskonfliktes; und
- Vorbereiten und Senden einer E-Mail-Nachricht, welche das geplante Ereignis ankündigt an jeden Ereignisteilnehmer.

24. Verfahren nach einem beliebigen der Ansprüche 20 bis 23, wobei das Verarbeiten der Planungsinformationen umfasst:
- Zugreifen auf ein global zugreifbares Register, in welchem extrahierte Planungsinformationen gespeichert werden;
- Entfernen des geplanten Ereignisses aus der Planungsinformationsdatenbank; und
- Vorbereiten und Senden einer E-Mail-Nachricht, welche die Ereignisunterdrückung ankündigt, an jeden Ereignisteilnehmer.

25. Verfahren nach einem beliebigen der Ansprüche 20 bis 24, wobei das Verarbeiten der Planungsinformationen umfasst:
- Zugreifen auf ein global zugreifbares Register, in welchem extrahierte Planungsinformationen gespeichert werden;
- Lokalisieren, in der Planungsinformationsdatenbank, von mit dem darin beschriebenen geplanten Ereignis assoziierten Daten;
- Bestätigen der Teilnahme des Absenders an dem geplanten Ereignis; und
- Vorbereiten und Senden einer E-Mail-Nachricht, welche die Ereignisbestätigung bestätigt und meldet, an den Absender.

26. Verfahren nach einem beliebigen der Ansprüche 20 bis 25, wobei das Verarbeiten der Planungsinformationen umfasst:
- Zugreifen auf ein global zugreifbares Register, in welchem extrahierte Planungsinformationen gespeichert werden;
- Lokalisierten, in der Planungsinformationsdatenbank, von mit dem darin beschriebenen geplanten Ereignis assoziierten Daten;
- Entfernen des Absenders als Teilnehmer an dem geplanten Ereignis; und
- Vorbereiten und Senden einer E-Mail-Nachricht, welche den Ereignisabbruch bestätigt und meldet, an den Absender.

27. Verfahren nach einem beliebigen der Ansprüche 20 bis 26, wobei das Verarbeiten der Planungsinformationen umfasst:
- Zugreifen auf ein global zugreifbares Register, in welchem extrahierte Planungsinformationen gespeichert werden;
- Lokalisieren, in der Planungsinformationsdatenbank, von mit dem Absender assoziierten Planungsdaten; und
- Vorbereiten und Senden einer E-Mail-Nachricht, welche die geplanten Ereignisse des Benutzers enthält, an den Absender.

28. Verfahren nach einem beliebigen der Ansprüche 20 bis 27, wobei das Verarbeiten der Planungsinformationen umfasst:
- Zugreifen auf ein global zugreifbares Register, in welchem extrahierte Planungsinformationen gespeichert werden;
- Lokalisierten, in der Planungsinformationsdatenbank, von mit dem Absender assoziierten Präferenzdaten;
- Aktualisieren der Präferenzdaten des Absenders in der Planungsinformationsdatenbank; und
- Vorbereiten und Senden einer E-Mail-Nachricht, welche über den Erfolg oder das Fehlschlagen der Aktualisierung von Präferenzen berichtet, an den Absender.

29. Verfahren nach einem beliebigen der Ansprüche 20 bis 28, wobei das Verarbeiten der Planungsinformationen umfasst:
- Zugreifen auf ein global zugreifbares Register, in welchem extrahierte Planungsinformationen gespeichert werden;
- Lokalisieren, in der Planungsinformationsdatenbank, von mit dem Absender assoziierten Präferenzdaten; und
- Vorbereiten und Senden einer E-Mail-Nachricht, welche Hilfsinformationen in Reaktion auf die Daten in dem global zugreifbaren Register und die Präferenzdaten enthält, an den Absender.

30. Verfahren nach einem beliebigen der Ansprüche 20 bis 29, weiterhin umfassend:
- Speichern der von dem Absender gesendeten und für das System bestimmten E-Mail-Nachrichten in der Nachrichtendatenbank; und
- Durchsuchen der Nachrichtendatenbank nach neuen Nachrichten.

31. Verfahren nach Anspruch 30, weiterhin umfassend das Prüfen auf elektronische Viren in den E-Mail-Nachrichten in der Nachrichtendatenbank.

32. Verfahren nach Anspruch 30, weiterhin umfassend das Prüfen, dass der Absender ein genehmigter Benutzer des Systems ist.

33. Verfahren nach einem beliebigen der Ansprüche 20 bis 32, wobei die Planungsprüfung beendet wird, wenn das festgelegte Zeitfenster überschritten wird.

34. Verfahren nach einem beliebigen der Ansprüche 20 bis 33, wobei die Planungsprüfung beendet wird, wenn eine "Suche-abbrechen"-Grenze überschritten wird.

## Revendications

1. Système de programmation d'événement à base de courrier électronique (10), comprenant :
- un analyseur de message (20) accédant à un message de courrier électronique (16) reçu de la part d'un expéditeur, extrayant l'information de programmation de celui-ci et stockant l'information de programmation extraite dans un format prédéterminé dans un enregistrement accessible globalement (22) ;
- l'enregistrement accessible globalement (22) stockant l'information de programmation extraite contenant des données de programmateur d'événement, des données d'événement, des données de ressources et des données de participants ;
- une base de données d'information de programme (84) ; et
- une fonction de traitement d'événement accédant à l'enregistrement accessible globalement (22) et à la base de données d'information de programme (84) ;
**caractérisé en ce que**
- la fonction de traitement d'événement comprend un auto-programmateur (110) accédant à l'enregistrement accessible globalement (22), obtenant une fenêtre de temps, déterminant un moment de début et un moment de fin d'une première période dans la fenêtre de temps, contrôlant la présence éventuelle de conflits de programmation avec les participants et les ressources pendant la première période ;
- système avec lequel, si un conflit de programmation est constaté, l'auto-programmateur (110) est adapté pour incrémenter à la fois le moment de début et le moment de fin et le contrôle du programme est répété, le contrôle du programme prenant fin si une solution de programme est trouvée ;
- l'auto-programmateur (110) programmant en outre un événement en stockant des données d'événement dans la base de données d'information de programme (84), et préparant puis envoyant un message de courrier électronique à chaque participant à l'événement annonçant l'événement programmé.

2. Système selon la revendication 1, avec lequel la fonction de traitement d'événement comprend un programmateur d'événement accédant à l'enregistrement accessible globalement, programmant un événement conformément à l'information de programmation extraite, et stockant l'information associée à l'événement programmé dans la base de données d'information de programme, le programmateur d'événement préparant en outre et envoyant un message de courrier électronique sortant à l'expéditeur et à tout participant à l'événement affecté pour accuser réception et notifier de l'événement programmé.

3. Système selon la revendication 2, avec lequel la base de données d'information de programme comprend :
- un enregistrement de programme d'utilisateur pour chaque utilisateur du système contenant les événements programmés pour l'utilisateur; et
- un enregistrement de programme de ressource pour chaque ressource contenant les événements programmés pour la ressource.

4. Système selon la revendication 2, avec lequel la base de données d'information de programme comprend un enregistrement d'information d'utilisateur pour chaque utilisateur du système, contenant l'identité de l'utilisateur, les préférences et les privilèges d'accès de l'utilisateur.

5. Système selon la revendication 2, avec lequel la base de données d'information de programme comprend un enregistrement d'événement pour chaque événement programmé, contenant un identificateur d'événement, les données temporelles de l'événement, les données de participants et les données de ressources.

6. Système selon l'une quelconque des revendications 1 à 5, avec lequel la fonction de traitement d'événement comprend un détecteur de conflit accédant à l'enregistrement accessible globalement, obtenant une période, contrôlant la présence de conflits de programmation au sein de la période avec les participants et les ressources, et préparant puis envoyant un courrier électronique à l'expéditeur le notifiant des données de conflit de programmation.

7. Système selon l'une quelconque des revendications 1 à 6, avec lequel la fonction de traitement d'événement comprend un mécanisme de priorité de programme accédant à l'enregistrement accessible globalement, programmant un événement en stockant des données d'événement dans la base de données d'information de programme indépendamment du conflit du programme avec les participants, et préparant puis envoyant un message de courrier électronique à chaque participant à l'événement lui annonçant l'événement programmé.

8. Système selon l'une quelconque des revendications 1 à 7, avec lequel la fonction de traitement d'événement comprend un mécanisme d'annulation d'événement accédant à l'enregistrement accessible globalement, supprimant l'événement programmé de la base de données d'information de programme, et préparant puis envoyant un message de courrier électronique à chaque participant à l'événement lui annonçant l'annulation de l'événement,

9. Système selon l'une quelconque des revendication 1 à 8, avec lequel la fonction de traitement d'événement comprend un mécanisme de confirmation d'événement accédant à l'enregistrement accessible globalement, localisant dans la base de données d'information de programme les données associées avec l'événement programmé qui y est décrit, confirmant la participation de l'expéditeur à l'événement programmé, et préparant puis envoyant un message de courrier électronique à l'expéditeur accusant réception et notifiant la confirmation de l'événement.

10. Système selon l'une quelconque des revendications 1 à 9, avec lequel la fonction de traitement d'événement comprend un processus de retrait de l'événement accédant à l'enregistrement accessible globalement, localisant dans la base de données d'information de programme les données associées avec l'événement programmé qui y est décrit, supprimant l'expéditeur en tant que participant à l'événement programmé, et préparant puis envoyant un message de courrier électronique à l'expéditeur accusant réception et notifiant le retrait de l'événement.

11. Système selon l'une quelconque des revendications 1 à 10, avec lequel la fonction de traitement d'événement comprend un notificateur de programme accédant à l'enregistrement accessible globalement, localisant dans la base de données d'information de programme les données de programme associées à l'expéditeur, et préparant puis envoyant un message de courrier électronique à l'expéditeur contenant les événements programmés de l'utilisateur.

12. Système selon l'une quelconque des revendications 1 à 11, avec lequel la fonction de traitement d'événement comprend un mécanisme de définition de préférence distante accédant à l'enregistrement accessible globalement, localisant dans la base de données d'information de programme les données de préférence associées avec l'expéditeur, mettant à jour les données de préférence de l'expéditeur dans la base de données d'information de programme, et préparant puis envoyant un message de courrier électronique à l'expéditeur le notifiant de la réussite et de l'échec des mises à jour des préférences.

13. Système selon l'une quelconque des revendications 1 à 12, avec lequel la fonction de traitement d'événement comprend une assistance d'outil à distance accédant à l'enregistrement accessible globalement, localisant dans la base de données d'information, de programme les données de préférence associées à l'expéditeur, et préparant puis envoyant un message de courrier électronique à l'expéditeur contenant des informations d'aide en réponse aux données dans l'enregistrement accessible globalement et aux données de préférence.

14. Système selon l'une quelconque des revendications 1 à 13, comprenant en outre :
- une base de données de message stockant les messages de courrier électronique destinés au système envoyés par l'expéditeur; et
- un détecteur de nouveau message balayant la base de données de message à la recherche de nouveaux messages.

15. Système selon la revendication 14, comprenant en outre un détecteur de virus contrôlant la présence de virus électroniques dans les messages de courrier électronique dans la base de données de message.

16. Système selon la revendication 14, comprenant en outre un contrôleur de sécurité vérifiant que l'expéditeur est un utilisateur autorisé du système.

17. Système selon l'une quelconque des revendications 1 à 16, comprenant en outre une interface utilisateur graphique à base de navigateur dotée d'un formulaire de saisie de données utilisable pour recevoir une saisie de l'utilisateur et préparer un message de courrier électronique contenant la saisie de l'utilisateur conformément à une syntaxe et des exigences de format prédéterminées.

18. Système selon l'une quelconque des revendications 1 à 17, avec lequel il est mis fin au contrôle du programme si la fenêtre de temps spécifiée est dépassée.

19. Système selon l'une quelconque des revendications 1 à 18, avec lequel il est mis fin au contrôle du programme si une limite de recherche rapide est dépassée.

20. Procédé de programmation d'événement à base de courrier électronique, comprenant :
- réception d'un message de courrier électronique (16) envoyé par un expéditeur à une adresse système prédéterminée de programmation d'événement ;
- analyse du message de courrier électronique (16) pour en extraire l'information de programmation, y compris des données de programmateur d'événement, des données d'événement, des données de ressources et des données de participants ;
- traitement de l'information de programmation extraite et accès à l'information de programme stockée dans une base de données d'information de programme (84),
**caractérisé en ce que** ledit traitement de l'information de programmation comprend :
- accès à un enregistrement accessible globalement (22) qui stocke l'information de programmation extraite ;
- obtention d'une fenêtre de temps ;
- détermination (120) d'un temps de début et d'un temps de fin d'une première période dans la fenêtre de temps ;
- contrôlant la présence éventuelle de conflits de programmation avec les participants et les ressources pendant la première période ;
- procédé selon lequel, si un conflit de programmation est constaté, incrémentation (130) à la fois du moment de début et du moment de fin et répétition du contrôle du programme, le contrôle du programme prenant fin si une solution de programme est trouvée ;
- programmation d'un événement en stockant des données d'événement dans la base de données d'information de programme (84) ; et
- préparation et envoi d'un message de courrier électronique à chaque participant à l'événement annonçant l'événement programmé.

21. Procédé selon la revendication 20, selon lequel le traitement de l'information de programmation comprend :
- accès à un enregistrement accessible globalement qui stocke l'information de programmation extraite ;
- programmation d'un événement conformément à l'information de programmation extraite ;
- stockage de l'information associée avec l'événement programmé dans la base de données d'information de programme ; et
- préparation et envoi d'un message de courrier électronique sortant à l'expéditeur et à tout participant à l'événement affecté pour accuser réception et notifier l'événement programmé.

22. Procédé selon la revendication 20 ou la revendication 21, selon lequel le traitement de l'information de programmation comprend :
- accès à un enregistrement accessible globalement qui stocke l'information de programmation extraite ;
- contrôle de la présence éventuelle de conflits de programmation au sein de la période avec les participants et les ressources ; et
- préparation et envoi d'un message de courrier électronique à l'expéditeur notifiant des données de conflit de programmation.

23. Procédé selon l'une quelconque des revendications 20 à 22, selon lequel le traitement de l'information de programmation comprend :
- accès à un enregistrement accessible globalement qui stocke l'information de programmation extraite ;
- programmation d'un événement en stockant des données d'événement dans la base de données d'information de programme indépendamment du conflit du programme avec les participants ; et
- préparation et envoi d'un message de courrier électronique à chaque participant à l'événement annonçant l'événement programmé.

24. Procédé selon l'une quelconque des revendications 20 à 23, selon lequel le traitement de l'information de programmation comprend :
- accès à un enregistrement accessible globalement qui stocke l'information de programmation extraite ;
- suppression de l'événement programmé de la base de données d'information de programme ; et
- préparation et envoi d'un message de courrier électronique à chaque participant à l'événement annonçant l'annulation de l'événement.

25. Procédé selon l'une quelconque des revendications 20 à 24, selon lequel le traitement de l'information de programmation comprend :
- accès à un enregistrement accessible globalement qui stocke l'information de programmation extraite ;
- localisation, dans la base de données d'information de programme, des données associées avec l'événement programmé qui y est décrit ;
- confirmation de la participation de l'expéditeur à l'événement programmé ; et
- préparation et envoi d'un message de courrier électronique à l'expéditeur accusant réception et notifiant de la confirmation de l'événement

26. Procédé selon l'une quelconque des revendications 20 à 25, selon lequel le traitement de l'information de programmation comprend :
- accès à un enregistrement accessible globalement qui stocke l'information de programmation extraite ;
- localisation, dans la base de données d'information de programme, des données associées avec l'événement programmé qui y est décrit ;
- suppression de l'expéditeur en tant que participant à l'événement programmé ; et
- préparation et envoi d'un message de courrier électronique à l'expéditeur accusant réception et notifiant du retrait de l'événement.

27. Procédé selon l'une quelconque des revendications 20 à 26, selon lequel le traitement de l'information de programmation comprend :
- accès à un enregistrement accessible globalement qui stocke l'information de programmation extraite ;
- localisation, dans la base de données d'information de programme, des données de programme associées avec l'expéditeur ; et
- préparation et envoi d'un message de courrier électronique à l'expéditeur contenant les événements programmés de l'utilisateur.

28. Procédé selon l'une quelconque des revendications 20 à 27, selon lequel le traitement de l'information de programmation comprend :
- accès à un enregistrement accessible globalement qui stocke l'information de programmation extraite ;
- localisation, dans la base de données d'information de programme, des données de préférence associées avec l'expéditeur ;
- mise à jour des données de préférence de l'expéditeur dans la base de données d'information de programme ; et
- préparation et envoi d'un message de courrier électronique à l'expéditeur notifiant de la réussite et de l'échec des mises à jour des préférences.

29. Procédé selon l'une quelconque des revendications 20 à 28, selon lequel le traitement de l'information de programmation comprend :
- accès à un enregistrement accessible globalement qui stocke l'information de programmation extraite ;
- localisation, dans la base de données d'information de programme, des données de préférence associées avec l'expéditeur; et
- préparation et envoi d'un message de courrier électronique à l'expéditeur contenant des informations d'aide en réponse aux données dans l'enregistrement accessible globalement et dans les données de préférences.

30. Procédé selon l'une quelconque des revendications 20 à 29, comprenant en outre :
- stockage des messages de courrier électronique destinés au système envoyés par l'expéditeur dans une base de données de message ; et
- balayage de la base de données de message à la recherche de nouveaux messages.

31. Procédé selon la revendication 30, comprenant en outre le contrôle de la présence de virus électroniques dans les messages de courrier électronique dans la base de données de message.

32. Procédé selon la revendication 30, comprenant en outre la vérification que l'expéditeur est un utilisateur autorisé du système.

33. Procédé selon l'une quelconque des revendications 20 à 32, selon lequel il est mis fin au contrôle du programme si la fenêtre de temps spécifiée est dépassée.

34. Procédé selon l'une quelconque des revendications 20 à 33, selon lequel il est mis fin au contrôle du programme si une limite de recherche rapide est dépassée.
